# EUROPEAN PATENT APPLICATION

(11) **EP 4 654 661 A1**
(43) Date of publication of application: **26.11.2025**
(21) Application number: 23920831.7
(22) Date of filing: 27.11.2023
(51) Int. Cl.: H04W 36/00

(54) **COMMUNICATION METHOD, COMMUNICATION APPARATUS, AND COMMUNICATION SYSTEM**

(30) Priority: 09.02.2023 CN 202310154348
(71) Applicant: Huawei Technologies Co., Ltd., Shenzhen, Guangdong 518129 (CN)
(72) Inventor: ZANG, Xin, Shenzhen, Guangdong 518129 (CN); ZHOU, Runze, Shenzhen, Guangdong 518129 (CN); WANG, Yuan, Shenzhen, Guangdong 518129 (CN)
(74) Representative: Epping - Hermann - Fischer
(86) International application number: PCT/CN2023/134274
(87) International publication number: WO 2024/164640

(57) **Abstract**

Embodiments of this application provide a communication method, a communication apparatus, and a communication system. The method includes: When clock status information of a first access network device does not meet a clock quality requirement parameter of a terminal device, the first access network device notifies a clock management network element that the clock status information of the first access network device does not meet the clock quality requirement parameter of the terminal device. In this way, an affected terminal device can be accurately determined when the clock status information of the first access network device changes.

## Description

### CROSS-REFERENCE TO RELATED APPLICATIONS

This application claims priority to Chinese Patent Application No. 202310154348.5, filed with the China National Intellectual Property Administration on February 9, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

Currently, an access network device in a network has a capability of providing time externally. In other words, the access network device serves as a clock source, and may provide a clock time provision service for another device (for example, a terminal device).

After clock status information of the clock source of the access network device changes, a terminal device that receives the time provision service of the access network device may be affected. How to accurately determine an affected terminal device needs to be resolved.

### SUMMARY

Embodiments of this application provide a communication method, a communication apparatus, and a communication system, to accurately determine an affected terminal device.

According to a first aspect, an embodiment of this application provides a communication method. The method may be performed by a first access network device or a module in the first access network device. For example, the first access network device performs the method. The method includes: obtaining a clock quality requirement parameter of a terminal device; and sending a first message to a clock management network element when clock status information of the first access network device accessed by the terminal device does not meet the clock quality requirement parameter of the terminal device, where the first message indicates that the clock status information of the first access network device does not meet the clock quality requirement parameter of the terminal device.

In the foregoing solution, when the clock status information of the first access network device does not meet the clock quality requirement parameter of the terminal device, the first access network device notifies the clock management network element that the clock status information of the first access network device does not meet the clock quality requirement parameter of the terminal device. In this way, an affected terminal device can be accurately determined when the clock status information of the first access network device changes.

In a possible implementation, that the clock status information of the first access network device accessed by the terminal device does not meet the clock quality requirement parameter of the terminal device includes: clock status information of a first cell does not meet the clock quality requirement parameter of the terminal device, where the first cell belongs to the first access network device, and the first cell is a cell accessed by the terminal device.

In the foregoing solution, the clock status information is set based on a granularity of cell, in other words, different cells of a same access network device respectively serve as clock sources, and have corresponding clock status information. In this way, a time provision service at a fine granularity can be provided.

In a possible implementation, the first message includes identification information of the terminal device, identification information of the first access network device, and indication information, and the indication information indicates that the clock status information of the first access network device does not meet the clock quality requirement parameter of the terminal device.

In a possible implementation, the first message includes identification information of the terminal device, identification information of the first access network device, and the clock status information of the first access network device. The clock management network element may determine clock status information of the terminal device based on the clock status information of the first access network device.

In a possible implementation, obtaining the clock quality requirement parameter of the terminal device includes: receiving a subscription request from the clock management network element, where the subscription request includes the identification information of the terminal device and the clock quality requirement parameter of the terminal device, and the subscription request is used to subscribe to a change notification of clock status information of the terminal device.

In a possible implementation, the clock quality requirement parameter of the terminal device in the clock management network element is from a third-party application. When the third-party application subscribes to the change notification of the clock status information of the terminal device from the clock management network element by using the subscription request, the subscription request includes identification information of at least one terminal device and a clock quality requirement parameter of each terminal device. When the clock status information of the terminal device changes, the clock management network element may send indication information or send changed clock status information of the terminal device to the third-party application, where the indication information indicates that the clock status information of the terminal device does not meet the clock quality requirement parameter of the terminal device.

In a possible implementation, obtaining the clock quality requirement parameter of the terminal device includes: receiving the clock quality requirement parameter of the terminal device from a mobility management network element, where the mobility management network element may obtain the clock quality requirement parameter of the terminal device from a data management network element. When the clock status information of the terminal device changes, the first access network device sends indication information or sends changed clock status information of the terminal device to the mobility management network element or the clock management network element, where the indication information indicates that the clock status information of the terminal device does not meet the clock quality requirement parameter of the terminal device.

In a possible implementation, obtaining the clock quality requirement parameter of the terminal device includes: receiving a context of the terminal device from a second access network device, where the context includes the clock quality requirement parameter of the terminal device; and the first access network device is a target access network device of the terminal device, and the second access network device is a source access network device of the terminal device.

In a possible implementation, the context further includes notification information, and the notification information indicates whether clock status information of the second access network device meets the clock quality requirement parameter of the terminal device.

In a possible implementation, a second message is sent to the clock management network element when the clock status information of the first access network device meets the clock quality requirement parameter of the terminal device, and the notification information indicates that the clock status information of the second access network device does not meet the clock quality requirement parameter of the terminal device, where the second message indicates that the clock status information of the first access network device meets the clock quality requirement parameter of the terminal device.

In the foregoing solution, when the clock status information of the second access network device does not meet the clock quality requirement parameter of the terminal device, but the clock status information of the first access network device meets the clock quality requirement parameter of the terminal device, it indicates that the terminal device changes from being unable to obtain a proper time provision service to being able to obtain a proper time provision service. Therefore, the first access network device sends, to the clock management network element, the second message indicating that the clock status information of the first access network device meets the clock quality requirement parameter of the terminal device, so that the clock management network element can learn in time that the terminal device can currently obtain a proper time provision service. This helps the clock management network element accurately manage the time provision service of the terminal device.

In a possible implementation, a third message is sent to the clock management network element, or it is determined not to send the third message when the clock status information of the first access network device does not meet the clock quality requirement parameter of the terminal device, and the notification information indicates that the clock status information of the second access network device does not meet the clock quality requirement parameter of the terminal device. The third message indicates that the clock status information of the first access network device does not meet the clock quality requirement parameter of the terminal device.

In a possible implementation, a fourth message is sent to the clock management network element when the clock status information of the first cell does not meet the clock quality requirement parameter of the terminal device, and clock status information of a second cell meets the clock quality requirement parameter of the terminal device, where the fourth message indicates that the clock status information of the second cell of the first access network device meets the clock quality requirement parameter of the terminal device. The first cell is a cell before handover, and the second cell is a cell after handover. Both the first cell and the second cell belong to the first access network device; or the first cell belongs to the first access network device and the second cell belongs to the second access network device.

In a possible implementation, a fifth message is sent to the clock management network element, or it is determined not to send the fifth message when the clock status information of the first cell does not meet the clock quality requirement parameter of the terminal device, and the clock status information of the second cell does not meet the clock quality requirement parameter of the terminal device. The fifth message indicates that the clock status information of the second cell of the first access network device does not meet the clock quality requirement parameter of the terminal device. The first cell is a cell before handover, and the second cell is a cell after handover. Both the first cell and the second cell belong to the first access network device; or the first cell belongs to the first access network device and the second cell belongs to the second access network device.

According to a second aspect, an embodiment of this application provides a communication method. The method may be performed by a second access network device or a module in the second access network device. For example, the second access network device performs the method. The method includes: receiving a request message from a first access network device, where the request message is used to request a context of a terminal device; and sending the context to the first access network device, where the context includes a clock quality requirement parameter of the terminal device; and the first access network device is a target access network device of the terminal device, and the second access network device is a source access network device of the terminal device.

In a possible implementation, the context further includes notification information, and the notification information indicates whether clock status information of the second access network device meets the clock quality requirement parameter of the terminal device.

According to a third aspect, an embodiment of this application provides a communication method. The method may be performed by a core network element or a module in the core network element. For example, the core network element performs the method. The method includes: receiving a clock status notification message from a first access network device, where the clock status notification message indicates that clock status information of the first access network device does not meet a clock quality requirement parameter of a terminal device; and determining, when the core network element has sent a first message, not to send a second message, where the first message indicates that clock status information of a second access network device does not meet the clock quality requirement parameter of the terminal device, the second message indicates that clock status information of the first access network device does not meet the clock quality requirement parameter of the terminal device, the first access network device is a target access network device, and the second access network device is a source access network device.

In the foregoing solution, when the clock status information of the first access network device does not meet the clock quality requirement parameter of the terminal device, the first access network device notifies the core network element that the clock status information of the first access network device does not meet the clock quality requirement parameter of the terminal device. In this way, an affected terminal device can be accurately determined when the clock status information of the first access network device changes. In addition, when the core network element has sent the first message indicating that the clock status information of the second access network device does not meet the clock quality requirement parameter of the terminal device, the core network element does not send, anymore, the second message indicating that the clock status information of the first access network device does not meet the clock quality requirement parameter of the terminal device, thereby reducing signaling overheads.

In a possible implementation, the clock status notification message includes identification information of the first access network device, identification information of the terminal device, and the clock status information of the first access network device. It is determined that the clock status information of the first access network device does not meet the clock quality requirement parameter of the terminal device.

In a possible implementation, a subscription request is received, where the subscription request includes the identification information of the terminal device and the clock quality requirement parameter of the terminal device, and the subscription request is used to subscribe to a change notification of clock status information of the terminal device.

In a possible implementation, the clock status notification message includes the clock quality requirement parameter of the terminal device.

In a possible implementation, the clock status notification message includes identification information of the first access network device, identification information of the terminal device, and indication information, and the indication information indicates that the clock status information of the first access network device does not meet the clock quality requirement parameter of the terminal device.

In a possible implementation, the core network element is a mobility management network element. Determining not to send the second message includes: determining not to send the second message to a clock management network element.

In a possible implementation, the core network element is a clock management network element. Determining not to send the second message includes: determining not to send the second message to an application function network element.

According to a fourth aspect, an embodiment of this application provides a communication method. The method may be performed by a core network element or a module in the core network element. For example, the core network element performs the method. The method includes: determining that a terminal device moves from a second access network device to a first access network device, where the first access network device is a target access network device of the terminal device, and the second access network device is a source access network device of the terminal device; and sending a second message when the core network element receives no first indication information from the first access network device and has sent a first message, where the first indication information indicates that clock status information of the first access network device does not meet a clock quality requirement parameter of the terminal device, the first message indicates that clock status information of the second access network device does not meet the clock quality requirement parameter of the terminal device, and the second message indicates that the clock status information of the first access network device meets the clock quality requirement parameter of the terminal device.

In the foregoing solution, when the clock status information of the first access network device meets the clock quality requirement parameter of the terminal device, the first access network device does not send, to the core network element, the first indication information indicating that the clock status information of the first access network device does not meet the clock quality requirement parameter of the terminal device, so that the core network element can determine that the clock status information of the first access network device meets the clock quality requirement parameter of the terminal device. In addition, the core network element determines, based on the previously sent first message indicating that the clock status information of the second access network device does not meet the clock quality requirement parameter of the terminal device, to send the second message indicating that the clock status information of the first access network device meets the clock quality requirement parameter of the terminal device. In this way, an affected terminal device can be accurately determined.

In a possible implementation, it is determined that the clock status information of the first access network device meets the clock quality requirement parameter of the terminal device.

In a possible implementation, a first subscription request is received, where the first subscription request includes identification information of the terminal device and the clock quality requirement parameter of the terminal device, and the first subscription request is used to subscribe to a change notification of clock status information of the terminal device.

In a possible implementation, the second message includes identification information of the first access network device, the identification information of the terminal device, and second indication information, and the second indication information indicates that the clock status information of the first access network device meets the clock quality requirement parameter of the terminal device.

In a possible implementation, the second message includes identification information of the first access network device, the identification information of the terminal device, and the clock status information of the first access network device.

In a possible implementation, the core network element is a mobility management network element. Sending the second message includes: sending the second message to a clock management network element.

In a possible implementation, the core network element is a clock management network element. Sending the second message includes: sending the second message to an application function network element.

In a possible implementation, the core network element is the clock management network element. In this case, a second subscription request is sent to a mobility management network element, where the second subscription request is used to subscribe to a change notification of a location of the terminal device; and a notification message from the mobility management network element is received, where the notification message includes the identification information of the first access network device in which the terminal device is located. Determining that the terminal device moves from the second access network device to the first access network device includes: determining, based on the notification message, that the terminal device moves from the second access network device to the first access network device.

In the foregoing solution, the clock management network element may obtain the location of the terminal device in time, to quickly determine whether the terminal device is handed over.

According to a fifth aspect, an embodiment of this application provides a communication apparatus. The apparatus may be an access network device or a module in the access network device. The apparatus has a function of implementing any one of implementations in the first aspect and the second aspect. The function may be implemented by hardware, or may be implemented by hardware by executing corresponding software. The hardware or the software includes one or more modules corresponding to the function.

According to a sixth aspect, an embodiment of this application provides a communication apparatus. The apparatus may be a core network element or a module in the core network element. The apparatus has a function of implementing any one of implementations in the third aspect and the fourth aspect. The function may be implemented by hardware, or may be implemented by hardware by executing corresponding software. The hardware or the software includes one or more modules corresponding to the function.

According to a seventh aspect, an embodiment of this application provides a communication apparatus, including a processor and a memory. The memory is configured to store computer instructions. When the apparatus runs, the processor executes the computer instructions stored in the memory, to enable the apparatus to perform any one of implementations in the first aspect to the fourth aspect.

According to an eighth aspect, an embodiment of this application provides a communication apparatus, including units or means (means) configured to perform steps of any one of implementations in the first aspect to the fourth aspect.

According to a ninth aspect, an embodiment of this application provides a communication apparatus, including a processor coupled to a memory. The processor is configured to invoke a program stored in the memory, to perform any one of implementations in the first aspect to the fourth aspect. The memory may be located inside or outside the apparatus. In addition, there may be one or more processors.

According to a tenth aspect, an embodiment of this application provides a communication apparatus, including a processor and an interface circuit. The processor is configured to: communicate with another apparatus through the interface circuit, and perform any one of implementations in the first aspect to the fourth aspect. There are one or more processors.

According to an eleventh aspect, an embodiment of this application further provides a computer program product. The computer program product includes a computer program or instructions. When the computer program or the instructions are run on a communication apparatus, any one of implementations in the first aspect to the fourth aspect is performed.

According to a twelfth aspect, an embodiment of this application further provides a computer-readable storage medium. The computer-readable storage medium stores instructions. When the instructions are run on a communication apparatus, any one of implementations in the first aspect to the fourth aspect is performed.

According to a thirteenth aspect, an embodiment of this application further provides a chip system, including a processor, configured to perform any one of implementations in the first aspect to the fourth aspect.

According to a fourteenth aspect, an embodiment of this application further provides a communication system, including a first access network device configured to perform the method according to any one of implementations in the first aspect, and a clock management network element configured to receive a first message from the first access network device.

According to a fifteenth aspect, an embodiment of this application further provides a communication system, including a core network element configured to perform the method according to any one of implementations in the third aspect, and a first access network device configured to send a clock status notification message to the core network element.

According to a sixteenth aspect, an embodiment of this application further provides a communication system, including a core network element configured to perform the method according to any one of implementations in the fourth aspect, and a first network element configured to receive a second message from the core network element.

In a possible implementation, the core network element is a mobility management network element, and the first network element is a clock management network element.

In another possible implementation, the core network element is a clock management network element, and the first network element is an application function network element.

According to a seventeenth aspect, an embodiment of this application further provides a communication method, including: A first access network device obtains a clock quality requirement parameter of a terminal device. The first access network device sends a first message to a clock management network element when clock status information of the first access network device accessed by the terminal device does not meet the clock quality requirement parameter of the terminal device, where the first message indicates that the clock status information of the first access network device does not meet the clock quality requirement parameter of the terminal device. The clock management network element receives the first message.

According to an eighteenth aspect, an embodiment of this application further provides a communication method, including: A first access network device sends a clock status notification message to a core network element, where the clock status notification message indicates that clock status information of the first access network device does not meet a clock quality requirement parameter of a terminal device. The core network element receives the clock status notification message. The core network element determines, when the core network element has sent a first message, not to send a second message, where the first message indicates that clock status information of a second access network device does not meet the clock quality requirement parameter of the terminal device, the second message indicates that the clock status information of the first access network device does not meet the clock quality requirement parameter of the terminal device, the first access network device is a target access network device, and the second access network device is a source access network device.

According to a nineteenth aspect, an embodiment of this application further provides a communication method, including: A core network element determines that a terminal device moves from a second access network device to a first access network device, where the first access network device is a target access network device of the terminal device, and the second access network device is a source access network device of the terminal device. The core network element sends a second message to the first network element when the core network element receives no first indication information from the first access network device and the core network element has sent a first message. The first network element receives the second message. The first indication information indicates that clock status information of the first access network device does not meet a clock quality requirement parameter of the terminal device, the first message indicates that clock status information of the second access network device does not meet the clock quality requirement parameter of the terminal device, and the second message indicates that the clock status information of the first access network device meets the clock quality requirement parameter of the terminal device.

In a possible implementation, the core network element is a mobility management network element, and the first network element is a clock management network element.

In another possible implementation, the core network element is a clock management network element, and the first network element is an application function network element.

### BRIEF DESCRIPTION OF DRAWINGS

FIG. 1(a) is a schematic of a 5G network architecture based on a service-based architecture;
FIG. 1(b) is a schematic of a 5G network architecture based on point-to-point interfaces;
FIG. 2 is a diagram of a communication system according to an embodiment of this application;
FIG. 3(a) is a flowchart of a communication method according to an embodiment of this application;
FIG. 3(b) is a flowchart of a communication method according to an embodiment of this application;
FIG. 3(c) is a flowchart of a communication method according to an embodiment of this application;
FIG. 4 is a flowchart of a communication method according to an embodiment of this application;
FIG. 5 is a flowchart of a communication method according to an embodiment of this application;
FIG. 6 is a flowchart of a communication method according to an embodiment of this application;
FIG. 7 is a flowchart of a communication method according to an embodiment of this application;
FIG. 8 is a flowchart of a communication method according to an embodiment of this application;
FIG. 9 is a diagram of a communication apparatus according to an embodiment of this application; and
FIG. 10 is a diagram of a communication apparatus according to an embodiment of this application.

### DESCRIPTION OF EMBODIMENTS

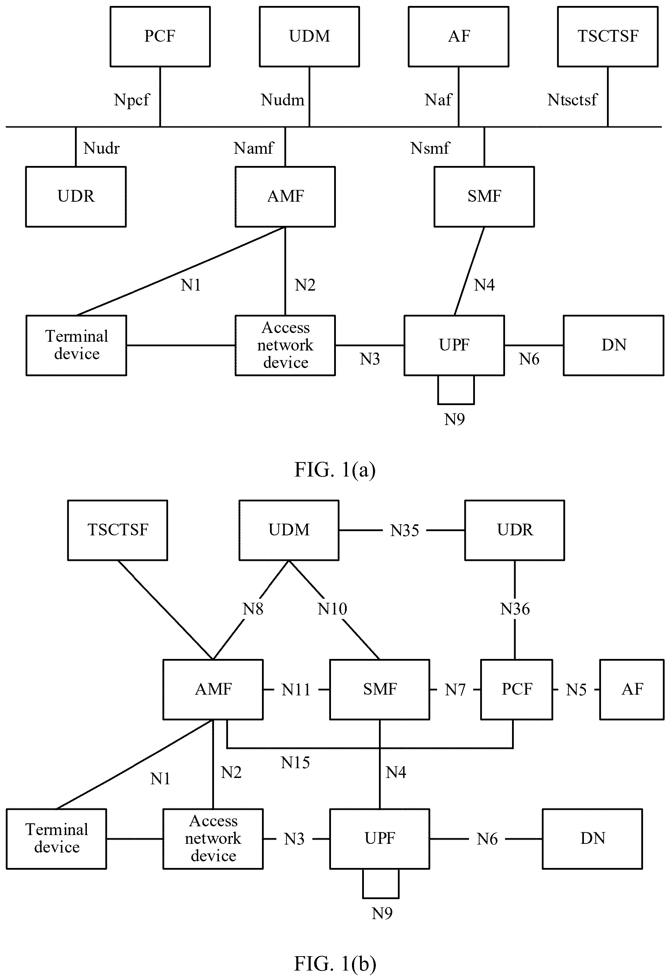

FIG. 1(a) is a schematic of a 5th generation (5th generation, 5G) network architecture based on a service-based architecture. The 5G network architecture shown in FIG. 1(a) includes a data network (data network, DN) and an operator network. The following briefly describes functions of some network elements in the network architecture.

The operator network includes one or more of the following network elements: an authentication server function (Authentication Server Function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, an access network (access network, AN) device (a radio access network (radio access network, RAN) device is used as an example in the figure), a time sensitive communication and time synchronization function (Time Sensitive Communication and Time Synchronization Function, TSCTSF) network element, and the like. In the operator network, a network element or device other than the access network device may be referred to as a core network element or a core network device.

The access network device includes a wired access network device and a radio access network device. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (6th generation, 6G) mobile communication system, a base station in a future mobile communication system, an access node in a wireless fidelity (wireless fidelity, Wi-Fi) system, or the like; or may be a module or a unit that completes some functions of a base station, for example, may be a central unit (central unit, CU), or may be a distributed unit (distributed unit, DU). The radio access network device may be a macro base station, may be a micro base station or an indoor base station, or may be a relay node, a donor node, or the like. A specific technology and a specific device form that are used by the access network device are not limited in embodiments of this application.

A terminal device communicating with the RAN includes a terminal, a user equipment (user equipment, UE), a mobile station, a mobile terminal, and the like. In the figure, an example in which the terminal device is the UE is used. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are not limited in embodiments of this application.

The access network device and the terminal device may be located in fixed locations, or may be movable. The access network device and the terminal device may be deployed on land, including indoors or outdoors, or may be handheld or vehicle-mounted; or may be deployed on water; or may be deployed on a plane, a balloon, or an artificial satellite in air. Application scenarios of the access network device and the terminal device are not limited in embodiments of this application. The mobility management network element is a control plane network element provided by the operator network, and is responsible for access control and mobility management for accessing the operator network by the terminal device, for example, including functions such as mobility status management, allocation of a temporary user identity, and user authentication and authorization. In 5G, the mobility management network element may be the AMF network element. In future communication such as 6th generation (6th generation, 6G), the mobility management network element may still be the AMF network element, or may have another name. This is not limited in this application.

The session management network element is a control plane network element provided by the operator network, and is responsible for managing a protocol data unit (protocol data unit, PDU) session of the terminal device. The PDU session is a channel used to transmit a PDU, and the terminal device and the DN need to transmit the PDU to each other through the PDU session. The SMF network element is responsible for establishment, maintenance, deletion, and the like of the PDU session. The session management network element includes session-related functions such as session management (for example, session establishment, modification, and release, including maintenance of a tunnel between a user plane network element and the access network device), selection and control of the user plane network element, service and session continuity (Service and Session Continuity, SSC) mode selection, and roaming. In 5G, the session management network element may be the SMF network element. In future communication such as 6G, the session management network element may still be the SMF network element, or may have another name. This is not limited in this application.

The user plane network element is a gateway provided by an operator, and is a gateway for communication between the operator network and the DN. The UPF network element includes user plane-related functions such as data packet routing and transmission, packet detection, service usage reporting, quality of service (Quality of Service, QoS) processing, monitoring, uplink packet detection, and downlink data packet storage. In 5G, the user plane network element may be the UPF network element. In future communication such as 6G, the user plane network element may still be the UPF network element, or may have another name. This is not limited in this application. The data management network element is a control plane network element provided by the operator, and is responsible for storing information such as a subscription permanent identifier (subscriber permanent identifier, SUPI), a credential (credential), a security context (security context), and subscription data of a subscriber in the operator network. The information stored in the data management network element may be used for authentication and authorization for accessing the operator network by the terminal device. The subscriber in the operator network may be specifically a user using a service provided by the operator network, for example, a user using a SIM card of China Telecom, or a user using a SIM card of China Mobile. The subscription permanent identifier (Subscription Permanent Identifier, SUPI) of the subscriber may be a number of the SIM card or the like. The credential and the security context of the subscriber may be stored small files such as an encryption key of the SIM card or information related to encryption of the SIM card, and are used for authentication and/or authorization. The security context may be data (cookie), a token (token), or the like stored in a local terminal (for example, a mobile phone) of the user. The subscription data of the subscriber may be a supporting service of the SIM card, for example, a traffic package or a used network of the SIM card. It should be noted that the permanent identifier, the credential, the security context, the authentication data (cookie), and the token are equivalent to information related to authentication and authorization, and are not distinguished or limited in this application document for ease of description. Unless otherwise specified, the security context is used as an example for description in embodiments of this application. However, embodiments of this application are also applicable to authentication and/or authorization information described in another manner. In 5G, the data management network element may be the UDM network element. In future communication such as 6G, the data management network element may still be the UDM network element, or may have another name. This is not limited in this application.

The unified data repository network element is a control plane network element provided by the operator, and includes a function of accessing data of a type such as subscription data, policy data, and application data. In 5G, the unified data repository network element may be the UDR network element. In future communication such as 6G, the unified data repository network element may still be the UDR network element, or may have another name. This is not limited in this application. A network exposure network element is a control plane network element provided by the operator. The network exposure network element securely exposes an external interface of the operator network to a third party. When the session management network element needs to communicate with a third-party network element, the network exposure network element may serve as a relay for communication between the session management network element and the third-party network element. When the network exposure network element serves as the relay, the network exposure network element may translate identification information of the subscriber and identification information of the third-party network element. For example, when sending the SUPI of the subscriber from the operator network to the third party, the network exposure network element may translate the SUPI into an external identity corresponding to the SUPI. On the contrary, when sending an external ID (a network element ID of the third party) to the operator network, the network exposure network element may translate the external ID into the SUPI. In 5G, the network exposure network element may be the NEF network element. In future communication such as 6G, the network exposure network element may still be the NEF network element, or may have another name. This is not limited in this application.

The application function network element is configured to transmit a requirement of an application side to a network side, for example, a QoS requirement or a user status event subscription. The application function network element may be a third-party functional entity, or may be an application server deployed by the operator. In 5G, the application function network element may be the AF network element. In future communication such as 6G, the application function network element may still be the AF network element, or may have another name. This is not limited in this application. The AF network element includes a TSN AF network element.

The policy control network element is a control plane function provided by the operator, and is configured to provide a policy of the PDU session for the session management network element. The policy may include a charging-related policy, a QoS-related policy, an authorization-related policy, and the like. In 5G, the policy control network element may be the PCF network element. In future communication such as 6G, the policy control network element may still be the PCF network element, or may have another name. This is not limited in this application.

The network repository function network element may be configured to: provide a network element discovery function, and provide, based on a request of another network element, network element information corresponding to a network element type. The network repository function network element further provides a network element management service, for example, network element registration, update, and de-registration, and network element status subscription and push. In 5G, the network repository function network element may be the NRF network element. In future communication such as 6G, the network repository function network element may still be the NRF network element, or may have another name. This is not limited in this application.

A clock management network element may be configured to manage clock information of one or more clock sources in a 5G network, and may provide the clock information of the clock sources externally through a port of the clock management network element, for example, directly or indirectly provide the clock information for the terminal device, the access network device, the core network element, or a third-party application function network element. The clock information represents time, a moment, or a time point of a clock. The clock management network element may further select a corresponding time provision network element based on a time provision request of a time provision requester. The time provision network element may be, for example, the UPF network element or the access network device, or may be the clock management network element. Then, the clock management network element indicates the time provision network element to provide a time provision service for the time provision requester. In 5G, the clock management network element may be the TSCTSF network element defined in 3GPP. In future communication such as 6G, the clock management network element may still be the TSCTSF network element, or may have another name. This is not limited in this application.

The DN is a network located outside the operator network. The operator network may access a plurality of DNs, and a plurality of services may be deployed on the DN, to provide services such as data and/or a voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

Npcf, Nudr, Nudm, Naf, Namf, Nsmf and Ntsctsf in FIG. 1(a) are service-based interfaces respectively provided by the foregoing PCF network element, the foregoing UDR network element, the foregoing UDM network element, the foregoing AF network element, the foregoing AMF network element, the foregoing SMF network element, and the foregoing TSCTSF network element, and are for invoking corresponding service-based operations. N1, N2, N3, N4, and N6 are interface sequence numbers. Meanings of these interface sequence numbers are as follows.
(1) N1 is an interface between the AMF network element and the UE, and may be configured to transmit non-access stratum (non-access stratum, NAS) signaling (for example, including a QoS rule from the AMF network element) to the UE, and the like.
(2) N2 is an interface between the AMF network element and the radio access network device, and may be configured to transmit radio bearer control information from a core network side to the radio access network device, and the like.
(3) N3 is an interface between the radio access network device and the UPF network element, and is mainly configured to transmit uplink user plane data and/or downlink user plane data between the radio access network device and the UPF network element.
(4) N4 is an interface between the SMF network element and the UPF network element, and may be configured to transfer information between a control plane and a user plane, including delivery of a forwarding rule, a QoS rule, a traffic statistics rule, and the like from the control plane to the user plane, and reporting of user plane information.
(5) N6 is an interface between the UPF network element and the DN, and is configured to transmit an uplink user data flow and/or a downlink user data flow between the UPF network element and the DN.

FIG. 1(b) is a schematic of a 5G network architecture based on point-to-point interfaces. For descriptions of functions of network elements in the 5G network architecture, refer to descriptions of functions of corresponding network elements in FIG. 1(a). Details are not described again. A main difference between FIG. 1(b) and FIG. 1(a) lies in the following: interfaces between control plane network elements in FIG. 1(a) are service-based interfaces, and interfaces between control plane network elements in FIG. 1(b) are point-to-point interfaces.

In the architecture shown in FIG. 1(b), names and functions of interfaces between network elements are as follows.
(1) For meanings of N1, N2, N3, N4, and N6 interfaces, refer to the foregoing descriptions.
(2) N5 is an interface between an AF network element and a PCF network element, and may be configured to deliver an application service request and report a network event.
(3) N7 is an interface between the PCF network element and an SMF network element, and may be configured to deliver a protocol data unit (protocol data unit, PDU) session granularity control policy and a service data flow granularity control policy.
(4) N8 is an interface between an AMF network element and a UDM network element, and may be used by the AMF network element to obtain subscription data and authentication data that are related to access and mobility management from the UDM network element, and used by the AMF network element to register information related to terminal device mobility management with the UDM network element, and the like.
(5) N9 is a user plane interface between UPF network elements, and is configured to transmit an uplink user data flow and/or a downlink user data flow between the UPF network elements.
(6) N10 is an interface between the SMF network element and the UDM network element, and may be used by the SMF network element to obtain subscription data related to session management from the UDM network element, and used by the SMF network element to register information related to a terminal device session with the UDM network element, and the like.
(7) N11 is an interface between the SMF network element and the AMF network element, and may be configured to: transmit PDU session tunnel information between a radio access network device and the UPF network element, transmit a control message to be sent to a terminal device, transmit radio resource control information to be sent to the radio access network device, and the like.
(8) N 15 is an interface between the PCF network element and the AMF network element, and may be configured to deliver a terminal device policy and an access control-related policy.
(9) N35 is an interface between the UDM network element and a UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, may be software functions running on dedicated hardware, or may be virtualized functions instantiated on a platform (for example, a cloud platform). Optionally, the network element or function may be implemented by one device, or may be jointly implemented by a plurality of devices, or may be a functional module in one device. This is not specifically limited in embodiments of this application.

In embodiments of this application, the UE, the base station, the AMF, the TSCTSF, the NEF, and the AF are respectively used as specific examples of the terminal device, the access network device, the mobility management network element, the clock management network element, the network exposure network element, and the application function network element for description.

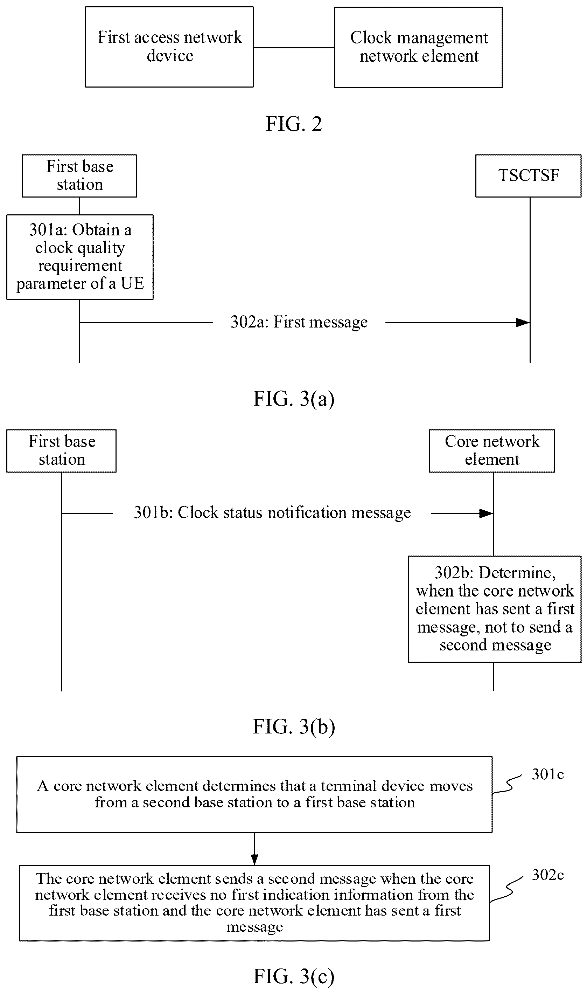

FIG. 2 is a diagram of a communication system according to an embodiment of this application. The system includes a first access network device and a clock management network element. The first access network device may be the access network device shown in FIG. 1(a) or FIG. 1(b), and the clock management network element may be the TSCTSF shown in FIG. 1(a) or FIG. 1(b) or another network element having a function of the TSCTSF. The first access network device may perform operations performed by a first base station or a base station 1 in the following method embodiments, and the clock management network element may perform operations performed by the TSCTSF in the following method embodiments.

FIG. 3(a) is a schematic flowchart of a communication method according to an embodiment of this application. The method includes the following steps.

Step 301 a: A first base station obtains a clock quality requirement parameter of a UE.

The clock quality requirement parameter of the UE includes one or more of the following information: a clock source, traceability to coordinated universal time (coordinated universal time, UTC) (traceability to UTC), a synchronization state (synchronization state), clock accuracy (clock accuracy), a clock class (clock class), and frequency stability (frequency stability).

In an implementation, the first base station may receive a subscription request from a TSCTSF, where the subscription request includes identification information of the UE and the clock quality requirement parameter of the UE, and the subscription request is used to subscribe to a change notification of clock status information of the UE. Therefore, the first base station may obtain the clock quality requirement parameter of the UE from the subscription request.

In another implementation, in a handover scenario, assuming that the first base station is a target base station after handover, and a second base station is a source base station before handover, the first base station may receive a context of the UE from the second base station, where the context includes the clock quality requirement parameter of the UE. Therefore, the first base station may obtain the clock quality requirement parameter of the UE from the context of the UE.

Step 302a: The first base station sends a first message to the TSCTSF when clock status information of the first base station accessed by the UE does not meet the clock quality requirement parameter of the UE, where the first message indicates that the clock status information of the first base station does not meet the clock quality requirement parameter of the UE.

The clock status information of the first base station includes one or more of the following information: a clock source, traceability to UTC, a synchronization state, clock accuracy, a clock class, frequency stability, and a source event (source event). The source event may be a clock degradation or a clock fault.

That the clock status information of the first base station does not meet the clock quality requirement parameter of the UE means that the clock status information of the first base station does not match the clock quality requirement parameter of the UE. For example, the synchronization state in the clock quality requirement parameter of the UE is Locked. When a clock of the first base station degrades or is faulty, the synchronization state in the clock status information of the first base station changes to holdover or freerun, and the clock status information of the first base station does not meet the clock quality requirement parameter of the UE. For another example, the clock class in the clock quality requirement parameter of the UE is 6. When the clock class in the clock status information of the first base station changes to 7, the clock status information of the first base station does not meet the clock quality requirement parameter of the UE.

In an implementation, the first message includes the identification information of the UE, identification information of the first base station, and indication information, and the indication information indicates that the clock status information of the first base station does not meet the clock quality requirement parameter of the UE. The TSCTSF learns, based on the indication information, that the clock status information of the first base station does not meet the clock quality requirement parameter of the UE.

In another implementation, the first message includes the identification information of the UE, identification information of the first base station, and the clock status information of the first base station. The TSCTSF determines, based on the clock status information of the first base station and the clock quality requirement parameter of the UE, that the clock status information of the first base station does not meet the clock quality requirement parameter of the UE. In addition, the TSCTSF may further determine that the clock status information of the first base station meets the clock status information of the UE.

In this application, the clock status information may be at a granularity of base station, or may be at a granularity of cell. The clock status information at the granularity of base station refers to that a same base station has only one piece of clock status information, and the clock status information at the granularity of cell refers to that different cells of a same base station each have one piece of clock status information, and clock status information of the different cells may be the same or may be different. When the clock status information is at the granularity of cell, the foregoing step 302a may also be described as follows: The first base station sends a first message to the TSCTSF when clock status information of a first cell of the first base station does not meet the clock quality requirement parameter of the UE, where the first message indicates that the clock status information of the first cell of the first base station does not meet the clock quality requirement parameter of the UE. The first cell belongs to the first base station, and the first cell is a cell accessed by the UE.

In the foregoing solution, when the clock status information of the first base station does not meet the clock quality requirement parameter of the UE, the first base station notifies the TSCTSF that the clock status information of the first base station does not meet the clock quality requirement parameter of the UE. In this way, an affected UE can be accurately determined when the clock status information of the first base station changes.

In an implementation, in a base station handover scenario, assuming that the first base station is a target base station after handover, and the second base station is a source base station before handover, the first base station may receive a context of the UE from the second base station, where the context includes notification information, and the notification information indicates whether clock status information of the second base station meets the clock quality requirement parameter of the UE. That is, the target base station may learn whether the clock status information of the source base station meets the clock quality requirement parameter of the UE. It should be noted that the clock status information of the second base station may also be replaced with clock status information of a second cell of the second base station, and the clock status information of the first base station may also be replaced with the clock status information of the first cell of the first base station, where the second cell is a cell accessed by the UE before handover, and the first cell is a cell accessed by the UE after handover.

In a case, if the notification information indicates that the clock status information of the second base station does not meet the clock quality requirement parameter of the UE, but the clock status information of the first base station meets the clock quality requirement parameter of the UE, the first base station may send a second message to the TSCTSF, where the second message indicates that the clock status information of the first base station meets the clock quality requirement parameter of the UE.

In another case, if the notification information indicates that the clock status information of the second base station does not meet the clock quality requirement parameter of the UE, and the clock status information of the first base station does not meet the clock quality requirement parameter of the UE either, the first base station may send a third message to the TSCTSF, where the third message indicates that the clock status information of the first base station does not meet the clock quality requirement parameter of the UE; or the first base station may determine not to send a third message.

In an implementation, in a cell handover scenario, it is assumed that the first cell is a cell before handover, and a second cell is a cell after handover. Both the first cell and the second cell may belong to the first base station; or the first cell belongs to the first base station, and the second cell belongs to the second base station. In a case, when the clock status information of the first cell does not meet the clock quality requirement parameter of the UE, and clock status information of the second cell meets the clock quality requirement parameter of the UE, a fourth message is sent to the TSCTSF, where the fourth message indicates that the clock status information of the second cell meets the clock quality requirement parameter of the UE. In another case, when the clock status information of the first cell does not meet the clock quality requirement parameter of the UE, and clock status information of the second cell does not meet the clock quality requirement parameter of the UE, a fifth message is sent to the TSCTSF, or it is determined not to send the fifth message, where the fifth message indicates that the clock status information of the second cell does not meet the clock quality requirement parameter of the UE.

FIG. 3(b) is a schematic flowchart of a communication method according to an embodiment of this application. This embodiment is applicable to a base station handover scenario. A base station accessed by a terminal device before handover is a second base station (also referred to as a source base station), and a base station accessed by the terminal device after handover is a first base station (also referred to as a target base station).

The method includes the following steps.

Step 301b: A core network element receives a clock status notification message from the first base station, where the clock status notification message indicates that clock status information of the first base station does not meet a clock quality requirement parameter of the UE.

The core network element is an AMF or a TSCTSF.

When the core network element is the AMF, the AMF receives the clock status notification message of the first base station from the first base station.

When the core network element is the TSCTSF, the AMF receives the clock status notification message of the first base station from the first base station, and then the AMF sends the clock status notification message of the first base station to the TSCTSF.

In an implementation, the clock status notification message includes identification information of the first base station, identification information of the UE, and the clock status information of the first base station. After receiving the clock status notification message, the core network element determines that the clock status information of the first base station does not meet the clock quality requirement parameter of the UE. A manner in which the core network device obtains the clock quality requirement parameter of the UE may be as follows: The core network element receives a subscription request, where the subscription request includes the identification information of the UE and the clock quality requirement parameter of the UE, and the subscription request is used to subscribe to a change notification of clock status information of the UE; or the clock status notification message further includes the clock quality requirement parameter of the UE.

In another implementation, the clock status notification message includes identification information of the first base station, identification information of the UE, and indication information, and the indication information indicates that the clock status information of the first base station does not meet the clock quality requirement parameter of the UE. Therefore, the core network device determines, based on the indication information, that the clock status information of the first base station does not meet the clock quality requirement parameter of the UE.

In an implementation, when the core network element is the TSCTSF, in addition to learning, in step 301b, that the clock status information of the first base station does not meet the clock quality requirement parameter of the UE, the TSCTSF may also learn, in the following manner, that the clock status information of the first base station does not meet the clock quality requirement parameter of the UE: The TSCTSF receives, from the AMF, the clock status information of the first base station and the identification information of the first base station in which the UE is located, so that the TSCTSF determines, based on the clock status information of the first base station and the clock quality requirement parameter of the UE, that the clock status information of the first base station does not meet the clock quality requirement parameter of the UE.

Step 302b: When the core network element has sent a first message, the core network element determines not to send a second message.

The first message indicates that clock status information of the second base station does not meet the clock quality requirement parameter of the UE, and the second message indicates that the clock status information of the first base station does not meet the clock quality requirement parameter of the UE.

In other words, when the clock status information of the source base station does not meet the clock quality requirement parameter of the UE, if the clock status information of the target base station still does not meet the clock quality requirement parameter of the UE after the UE is handed over to the target base station, because the core network element has sent the first message indicating that the source base station does not meet the clock quality requirement parameter of the UE, the core network device may determine not to send, anymore, the second message indicating that the target base station does not meet the clock quality requirement parameter of the UE. This is because the UE cannot obtain a proper time provision service from the source base station, and the case in which the UE cannot obtain a proper time provision service has been reported by using the first message. Although the UE is handed over to the target base station, the target base station cannot provide a proper time provision service either, in other words, a state in which the UE cannot obtain a proper time provision service does not change. Therefore, the core network element may determine not to perform reporting anymore, that is, not to send the second message. In this way, signaling overheads can be reduced.

In an implementation, the core network element is the AMF, and step 302b is specifically as follows: The AMF determines not to send the second message to the TSCTSF.

In another implementation, the core network element is the TSCTSF, and step 302b is specifically as follows: The TSCTSF determines not to send the second message to an AF.

In the foregoing solution, when the clock status information of the first base station does not meet the clock quality requirement parameter of the UE, the first base station notifies the core network element that the clock status information of the first base station does not meet the clock quality requirement parameter of the UE. In this way, an affected UE can be accurately determined when the clock status information of the first base station changes. In addition, when the core network element has sent the first message indicating that the clock status information of the second base station does not meet the clock quality requirement parameter of the UE, the core network element does not send, anymore, the second message indicating that the clock status information of the first base station does not meet the clock quality requirement parameter of the UE, thereby reducing signaling overheads.

FIG. 3(c) is a schematic flowchart of a communication method according to an embodiment of this application. This embodiment is applicable to a handover scenario. A base station accessed by a terminal device before handover is a second base station (also referred to as a source base station), and a base station accessed by the terminal device after handover is a first base station (also referred to as a target base station).

The method includes the following steps.

Step 301c: A core network element determines that the UE moves from the second base station to the first base station.

The core network element is an AMF or a TSCTSF.

When the core network element is the AMF, assuming that the AMF provides an access service for both the first base station and the second base station, the AMF may learn, in a handover process, that the UE moves from the second base station to the first base station. Assuming that the AMF provides an access service for the first base station, the AMF may learn, by interacting with another AMF in a handover process, that the UE moves from the second base station to the first base station. The another AMF is an AMF that provides an access service for the second base station.

When the core network element is the TSCTSF, the TSCTSF sends a subscription request (where the subscription request is also referred to as a second subscription request in this application) to the AMF. The subscription request is used to subscribe to a change notification of a location of the UE. Subsequently, the TSCTSF receives a notification message from the AMF, where the notification message includes identification information of the first base station in which the UE is located. Therefore, the TSCTSF determines, based on the notification message, that the UE moves from the second base station to the first base station.

Step 302c: The core network element sends a second message when the core network element receives no first indication information from the first base station and the core network element has sent a first message.

The first indication information indicates that clock status information of the first base station does not meet a clock quality requirement parameter of the UE. The first message indicates that clock status information of the second base station does not meet the clock quality requirement parameter of the UE. The second message indicates that the clock status information of the first base station meets the clock quality requirement parameter of the UE.

Because the target base station does not send the first indication information to the core network element, the core network element determines that the clock status information of the target base station meets the clock quality requirement parameter of the UE. In addition, the core network element has previously sent the first message indicating that the source base station does not meet the clock quality requirement parameter of the UE. This indicates that the source base station cannot provide a proper time provision service for the UE, but the target base station can provide a proper time provision service for the UE. Therefore, the core network element determines to perform reporting, that is, to send the second message. In this way, whether the UE can obtain a proper time provision service can be accurately reported.

In an implementation, the core network element may receive a subscription request (where the subscription request is also referred to as a first subscription request in this application). The subscription request includes identification information of the UE and the clock quality requirement parameter of the UE, and the subscription request is used to subscribe to a change notification of clock status information of the UE. Therefore, the core network element may obtain the clock quality requirement parameter of the UE from the subscription request.

In an implementation, the second message includes identification information of the first base station, the identification information of the UE, and second indication information, and the second indication information indicates that the clock status information of the first base station meets the clock quality requirement parameter of the UE. In another implementation, the second message includes identification information of the first base station, the identification information of the UE, and the clock status information of the first base station.

In an implementation, the core network element is the AMF, and step 302c is specifically as follows: The AMF sends the second message to the TSCTSF. In another implementation, the core network element is the TSCTSF, and step 302c is specifically as follows: The TSCTSF sends the second message to an AF.

It should be noted that, when the core network element is the TSCTSF, in addition to determining, in a manner of determining that the first indication information is not received, that the clock status information of the first base station meets the clock quality requirement parameter of the UE, the TSCTSF may also determine, in the following manner, that the clock status information of the first base station meets the clock quality requirement parameter of the UE: The TSCTSF obtains, from the AMF in the foregoing subscription manner, the identification information of the first base station in which the UE is located, and then the TSCTSF obtains the clock status information of the first base station from the AMF or an OAM, to determine that the clock status information of the first base station meets the clock quality requirement parameter of the UE.

In the foregoing solution, when the clock status information of the first base station meets the clock quality requirement parameter of the UE, the first base station does not send, to the core network element, the first indication information indicating that the clock status information of the first base station does not meet the clock quality requirement parameter of the UE, so that the core network element can determine that the clock status information of the first base station meets the clock quality requirement parameter of the UE. In addition, the core network element determines, based on the previously sent first message indicating that the clock status information of the second base station does not meet the clock quality requirement parameter of the UE, to send the second message indicating that the clock status information of the first base station meets the clock quality requirement parameter of the UE. In this way, an affected UE can be accurately determined.

The following describes the embodiment in FIG. 3(a) with reference to a specific example.

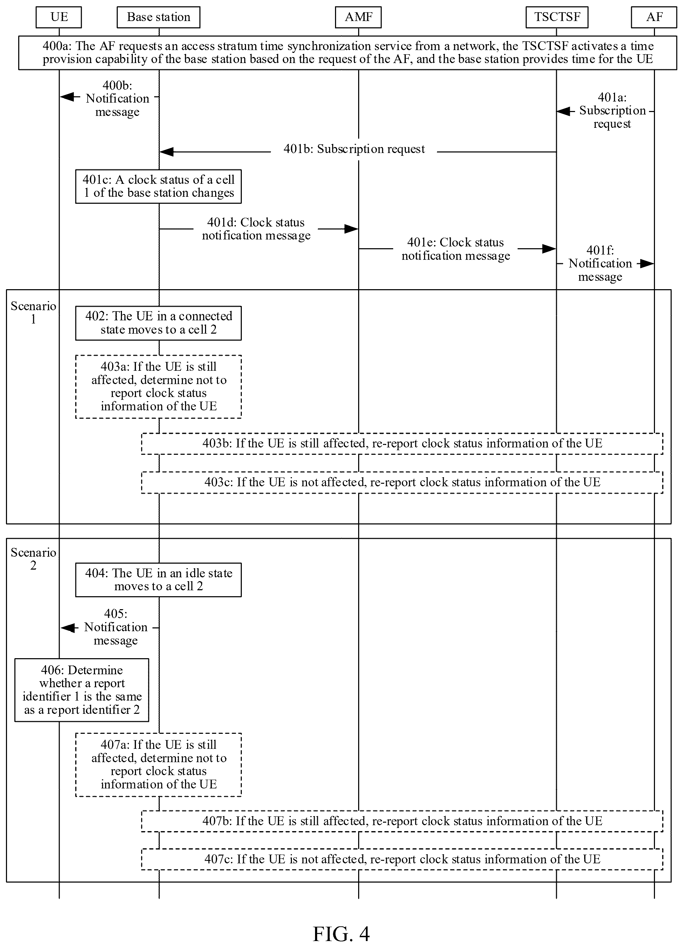

FIG. 4 is a schematic flowchart of a communication method according to an embodiment of this application. The embodiment in FIG. 4 is a specific example of the embodiment in FIG. 3(a). In this embodiment, a cell accessed by a UE is updated from a cell 1 to a cell 2, and the cell 1 and the cell 2 belong to a same base station.

The method includes the following steps.

Step 400a: An AF requests an access stratum time synchronization service from a network, a TSCTSF activates a time provision capability of a base station based on the request of the AF, and the base station provides time for the UE.

The AF sends a time provision request to the TSCTSF via an NEF. The time provision request includes identification information of the UE, and further includes information such as time provision accuracy. The time provision request is used to request to provide a time provision service with the time provision accuracy for the UE. The TSCTSF selects a base station that provides a time provision service for the UE, and then the TSCTSF notifies, via an AMF, the base station to provide a time provision service with corresponding time provision accuracy for the UE. Step 400b: After providing time for the UE, the base station sends a notification message to the UE, where the notification message includes identification information of the cell 1 and a report identifier 1 (report ID 1) of the cell 1.

The UE currently accesses the cell 1 of the base station.

The report ID 1 indicates clock status information of the cell 1. A function of a report ID is as follows: A report ID stored in the UE indicates clock status information of a clock source that currently provides a time provision service for the UE. If the UE subsequently receives a new report ID, the UE compares the new report ID with the previously stored report ID. If the two report IDs are different, it indicates that clock status information of a new clock source that provides a time provision service for the UE is different from the clock status information of the clock source that previously provides the time provision service for the UE. If the two report IDs are the same, it indicates that clock status information of a new clock source that provides a time provision service for the UE is the same as the clock status information of the clock source that previously provides the time provision service for the UE.

In an implementation, composition of the report ID is the scope of RAN ID/cell ID + an integer (integer), and the scope of RAN ID/cell ID indicates that the report ID may use a RAN node as a granularity, or may use a cell (cell) as a granularity, or may be at a group granularity of group of RAN nodes or cells. RAN nodes or cells in a same group have same clock status information. The integer in the report ID indicates whether the clock status information changes. In a possible implementation, the integer in the report ID is mapped to one or more pieces of content in the clock status information of the cell, and the UE may indicate the clock status information by using the integer. For example, there is a corresponding mapping relationship between the integer and a clock class in the clock status information, and the UE obtains, by using the integer in the report ID, the clock class in the clock status information of the cell corresponding to the report ID.

In a possible manner, subscription data of the UE includes a requirement of the UE for the report ID and/or a mapping relationship between the report ID and the clock status information. When the UE registers with the network, the AMF obtains, from a UDM, the requirement for the report ID in the subscription data of the UE and/or the mapping relationship between the report ID and the clock status information, and notifies the UE. The UE may subsequently determine, based on the report ID, whether clock status information of a current base station meets the requirement. The AMF may further obtain a clock quality requirement parameter of the UE from the UDM, and forward the clock quality requirement parameter of the UE to the base station accessed by the UE. When the clock status information of the base station accessed by the UE does not meet the clock quality requirement parameter of the UE, the base station sends, to the UE, indication information indicating that the clock status information of the base station does not meet the clock quality requirement parameter of the UE.

In a possible manner, subscription data of the UE includes a requirement of the UE for the report ID and/or a mapping relationship between the report ID and the clock status information. When a third-party application (that is, the AF) requests the network to provide clock synchronization information for the UE, the TSCTSF obtains, from a UDM, the requirement for the report ID in the subscription data of the UE and/or the mapping relationship between the report ID and the clock status information, and notifies the UE. The UE may subsequently determine, based on the report ID, whether clock status information of a base station currently accessed by the UE meets the requirement. In a possible manner, the TSCTSF may further obtain subscription data of the UE from a UDM to obtain information about a requirement of the UE for a clock synchronization service, for example, one or more pieces of information such as an air interface time provision error (Uu error budget) of the clock synchronization service, a coverage area (coverage area) of the clock synchronization service, valid time (start and stop time) of the clock synchronization service, and a clock quality requirement parameter of the UE. In this case, the TSCTSF performs, based on the requirement for the clock synchronization service in the subscription data of the UE, authorization and authentication on a requirement for a clock synchronization service requested by a third-party application, determines whether to receive the clock synchronization service request of the third-party application, and determines the requirement for the clock synchronization service. In a possible manner, a requirement for a clock synchronization service in subscription data of the UE is used as an upper limit of a clock synchronization service request. The TSCTSF receives a clock synchronization service requested by a third-party application only when a requirement for the clock synchronization service requested by the third-party application is within a range of the requirement for the clock synchronization service in the subscription data of the UE. In addition, the TSCTSF uses an intersection requirement of the clock synchronization service requested by the third-party application and the requirement for the clock synchronization service in the subscription data of the UE as a requirement for providing clock synchronization for the UE. Then, the requirement is sent to a PCF for deploying the clock synchronization service. When the requirement for the clock synchronization service requested by the third-party application is not within the range of the requirement for the clock synchronization service in the subscription data of the UE, the TSCTSF rejects the clock synchronization service requested by the third-party application.

Step 401a: The AF sends a subscription request to the TSCTSF. Correspondingly, the TSCTSF receives the subscription request.

The subscription request is used to subscribe to a change notification of clock status information of one or more UEs. That is, when the clock status information of the UE changes, the AF is notified.

In another implementation, the subscription request is used to subscribe to a notification indicating whether clock status information of one or more UEs meets the clock quality requirement parameter of the UE. That is, when the clock status information of the UE changes, the AF needs to be notified of whether changed clock status information of the UE meets the clock quality requirement parameter of the UE. For ease of description, the following solution of this application is described by using a case in which the subscription request is used to subscribe to the notification indicating whether the clock status information of the one or more UEs meets the clock quality requirement parameter of the UE.

The subscription request includes identification information (a UE ID) of one or more UEs and a clock quality requirement parameter of each UE.

For specific content of the clock quality requirement parameter of the UE, refer to the descriptions in the embodiment in FIG. 3(a). Details are not described again.

Step 401b: The TSCTSF sends a subscription request to the base station. Correspondingly, the base station receives the subscription request.

Content in the subscription request is the same as content in the subscription request in step 401a. The subscription request sent by the TSCTSF to the base station is sent to the base station via the AMF. The AMF may obtain the content in the subscription request, or may only forward the subscription request.

Step 401c: A clock status of the cell 1 of the base station changes.

That the clock status of the cell 1 changes means that one or more pieces of information in the clock status information of the cell change.

After the clock status of the cell 1 changes, the base station further determines an affected UE in the cell 1. The affected UE is a UE for which the cell 1 provides a time provision service, and the clock status information of the cell 1 does not meet a clock quality requirement parameter of the affected UE.

In addition, the affected UE is the UE subscribed to in step 401a and step 401b.

Step 401d: The base station sends a clock status notification message to the AMF. Correspondingly, the AMF receives the clock status notification message.

The clock status notification message indicates that the clock status information of the cell 1 does not meet the clock quality requirement parameter of the UE.

The clock status notification message includes identification information (a RAN ID) of the base station, the identification information (a cell ID 1) of the cell 1, and identification information (a UE ID) of the affected UE, and further includes indication information and/or the clock status information of the cell 1.

The indication information indicates that the clock status information of the cell 1 does not meet the clock quality requirement parameter of the UE.

The clock status information of the cell 1 refers to changed clock status information of the cell 1, for example, specifically includes one or more of the following information: a clock source, traceability to UTC, a synchronization state, clock accuracy, a clock class, frequency stability, and a source event (source event). The source event may be a clock degradation or a clock fault.

In an implementation, the clock status notification message is carried in next generation application protocol (next generation application protocol, NGAP) signaling sent by the base station, and is sent to the AMF.

Step 401e: The AMF sends a clock status notification message to the TSCTSF. Correspondingly, the TSCTSF receives the clock status notification message.

The clock status notification message is the clock status notification message in step 401d.

Step 401f. The TSCTSF sends a notification message to the AF. Correspondingly, the AF receives the notification message.

The notification message includes the identification information of the affected UE, and includes indication information and/or clock status information of the affected UE.

The indication information indicates that the clock status information of the affected UE does not meet the clock quality requirement parameter of the UE.

The clock status information of the affected UE is determined based on the clock status information of the cell 1. The clock status information of the affected UE includes one or more of the following information: a clock source, traceability to UTC, a synchronization state, clock accuracy, a clock class, and frequency stability.

In an implementation, if the clock status of the base station or the cell 1 of the base station is upgraded later (where this is also referred to as clock improvement), and after the status upgrade, clock status information of the cell 1 meets the clock quality requirement parameter of the UE, the base station may resend a clock status notification message, indicating that the clock status information of the UE changes because the clock status information of the cell 1 changes. The clock status notification message indicates that the clock status information of the cell 1 meets the clock quality requirement parameter of the UE.

After step 401f, two scenarios are separately described.

Scenario 1: The UE is in a connected (connected) state and the UE moves from the cell 1 to the cell 2.

The scenario 1 relates to the following step 402, step 403a, step 403b, and step 403c.

Step 402: The UE in the connected state moves to the cell 2.

The following step 403a, step 403b, or step 403c is performed after step 402, that is, one of step 403a, step 403b, and step 403c is performed.

Step 403a: If the UE is still affected, the base station determines not to report the clock status information of the UE.

The "still affected" herein means that clock status information of the cell 2 does not meet the clock quality requirement parameter of the UE either.

Specifically, the base station determines that the clock status information of the cell 2 does not meet the clock quality requirement parameter of the UE, and determines that the clock status notification message has been sent in step 401d, where the clock status notification message indicates that the clock status information of the cell 1 does not meet the clock quality requirement parameter of the UE. Therefore, the base station determines not to send another clock status notification message anymore, where the clock status notification message indicates that the clock status information of the cell 2 does not meet the clock quality requirement parameter of the UE. This is because the TSCTSF/AF has learned that the UE cannot obtain a proper time provision service in the cell 1. Although the UE is handed over to the cell 2, the cell 2 cannot provide a proper time provision service either. Therefore, a state in which the UE cannot obtain a proper time provision service does not change, and the base station may not perform reporting anymore. Step 403b: If the UE is still affected, re-report the clock status information of the UE.

That the base station re-reports the clock status information of the UE specifically includes three steps similar to step 401d, step 401e, and step 401f.

Specifically, the base station sends a clock status notification message to the AMF, and then the AMF forwards the clock status notification message to the TSCTSF. The clock status notification message includes identification information (a RAN ID) of the base station, identification information (a cell ID 2) of the cell 2, and identification information (a UE ID) of the affected UE, and further includes indication information and/or clock status information of the cell 2. The indication information indicates that the clock status information of the cell 2 does not meet the clock quality requirement parameter of the UE. The clock status information of the cell 2 includes one or more of the following information: a clock source, traceability to UTC, a synchronization state, clock accuracy, a clock class, frequency stability, and a source event. The source event may be a clock degradation, a clock fault, or clock improvement.

Then, the TSCTSF sends a notification message to the AF. The notification message includes the identification information of the affected UE, and includes indication information and/or clock status information of the affected UE. The indication information indicates that the clock status information of the affected UE does not meet the clock quality requirement parameter of the UE. The clock status information of the affected UE is determined based on the clock status information of the cell 2. The clock status information of the affected UE includes one or more of the following information: a clock source, traceability to UTC, a synchronization state, clock accuracy, a clock class, and frequency stability.

Step 403c: If the UE is not affected, re-report the clock status information of the UE.

The "not affected" herein means that clock status information of the cell 2 meets the clock quality requirement parameter of the UE.

That the base station re-reports the clock status information of the UE specifically includes three steps similar to step 401d, step 401e, and step 401f.

Specifically, the base station sends a clock status notification message to the AMF, and then the AMF forwards the clock status notification message to the TSCTSF. The clock status notification message includes identification information (a RAN ID) of the base station, identification information (a cell ID 2) of the cell 2, and identification information (a UE ID) of the UE, and further includes indication information and/or the clock status information of the cell 2. The indication information indicates that the clock status information of the cell 2 meets the clock quality requirement parameter of the UE. The clock status information of the cell 2 includes one or more of the following information: a clock source, traceability to UTC, a synchronization state, clock accuracy, a clock class, frequency stability, and a source event. The source event may be clock improvement.

Then, the TSCTSF sends a notification message to the AF. The notification message includes the identification information of the UE, and includes indication information and/or the clock status information of the UE. The indication information indicates that the clock status information of the affected UE meets the clock quality requirement parameter of the UE. The clock status information of the affected UE is determined based on the clock status information of the cell 2. The clock status information of the affected UE includes one or more of the following information: a clock source, traceability to UTC, a synchronization state, clock accuracy, a clock class, and frequency stability.

Scenario 2: The UE is in an idle (idle) state and the UE moves from the cell 1 to the cell 2.

The scenario 2 relates to the following step 404 to step 406, step 407a, step 407b, and step 407c. Step 404: The UE in the idle state moves to the cell 2.

Step 405: The base station sends a notification message to the UE. Correspondingly, the UE receives the notification message.

The notification message includes identification information of the cell 2 and a report identifier 2 (report ID 2) of the cell 2.

The UE currently accesses the cell 2 of the base station.

The report ID 2 indicates a clock status of the cell 2.

Step 406: The UE determines whether the report identifier 1 is the same as the report identifier 2. In a case, if the report identifier 1 is the same as the report identifier 2, it indicates that the clock status of the cell 2 is the same as the clock status of the cell 1. Because the UE is affected in the cell 1, the UE is still affected in the cell 2. In addition, if the report identifier 2 is the same as the report identifier 1, the UE does not enter the connected state.

In another case, if the report identifier 2 is different from the report identifier 1, the UE enters the connected state. Further, after the UE enters the connected state, the base station further performs the following step 407a, step 407b, or step 407c.

Step 407a is the same as step 403a.

Step 407b is the same as step 403b.

Step 407c is the same as step 403c.

In the foregoing solution, the UE moves between different cells of a same base station, and correctly determines and reports an affected UE by using a cell as a granularity.

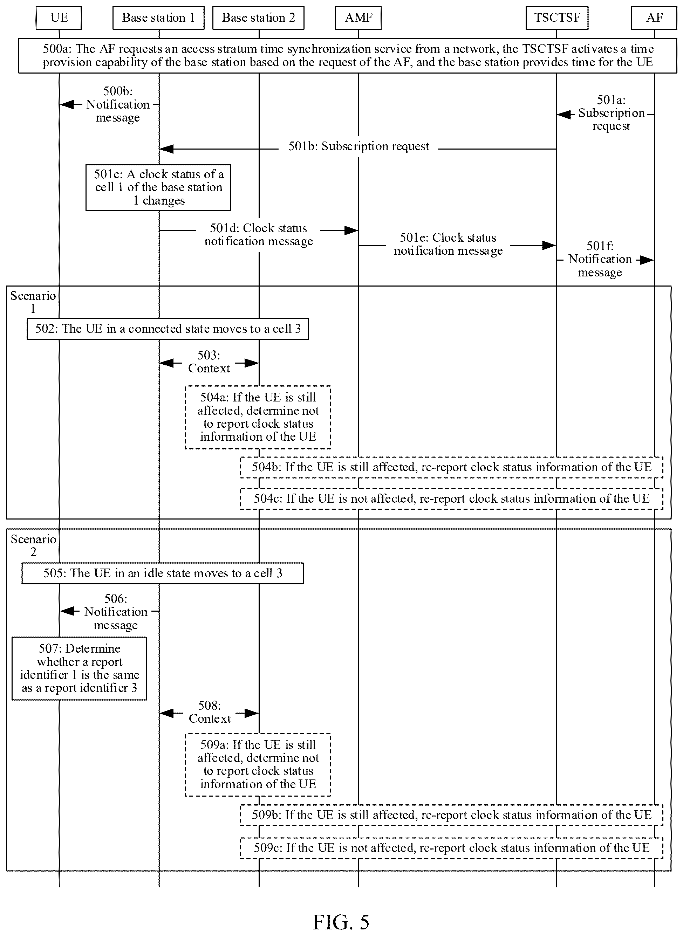

FIG. 5 is a schematic flowchart of a communication method according to an embodiment of this application. The embodiment in FIG. 5 is a specific example of the embodiment in FIG. 3(a). In this embodiment, a cell accessed by a UE is updated from a cell 1 of a base station 1 to a cell 3 of a base station 2. The method includes the following steps.

Step 500a is the same as step 400a in the foregoing embodiment.

Step 500b is the same as step 400b in the foregoing embodiment.

Step 501a is the same as step 401a in the foregoing embodiment.

Step 501b is the same as step 401b in the foregoing embodiment.

Step 501c is the same as step 401c in the foregoing embodiment.

Step 501d is the same as step 401d in the foregoing embodiment.

Step 501e is the same as step 401e in the foregoing embodiment.

Step 501f is the same as step 401f in the foregoing embodiment.

After step 501f, two scenarios are separately described.

Scenario 1: The UE is in a connected state and the UE moves from the cell 1 of the base station 1 to the cell 3 of the base station 2.

The scenario 1 relates to the following step 502, step 503, step 504a, step 504b, and step 504c. Step 502: The UE in the connected state moves to the cell 3.

The cell 3 and the cell 1 belong to different base stations.

Step 503: The base station 2 obtains a context of the UE from the base station 1.

The context includes a clock quality requirement parameter of the UE and notification information. The notification information indicates that clock status information of the base station 1 does not meet the clock quality requirement parameter of the UE, and further indicates that a clock status notification message has been sent, where the clock status notification message indicates that the clock status information of the base station 1 does not meet the clock quality requirement parameter of the UE.

The following step 504a, step 504b, or step 504c is performed after step 503, that is, one of step 504a, step 504b, and step 504c is performed.

Step 504a: If the UE is still affected, the base station 2 determines not to report clock status information of the UE.

The "still affected" herein means that clock status information of the cell 3 does not meet the clock quality requirement parameter of the UE either.

Specifically, the base station 2 determines that the clock status information of the cell 3 does not meet the clock quality requirement parameter of the UE, and the base station 2 determines, based on the notification information in the context, that the base station 1 has sent the clock status notification message, where the clock status notification message indicates that the clock status information of the base station 1 does not meet the clock quality requirement parameter of the UE. Therefore, the base station 2 determines not to send another clock status notification message anymore, where the clock status notification message indicates that the clock status information of the cell 3 does not meet the clock quality requirement parameter of the UE. This is because a TSCTSF/an AF has learned that the UE cannot obtain a proper time provision service in the cell 1. Although the UE is handed over to the cell 3, the cell 3 cannot provide a proper time provision service either. Therefore, a state in which the UE cannot obtain a proper time provision service does not change, and the base station 2 may not perform reporting anymore.

Step 504b: If the UE is still affected, re-report the clock status information of the UE. Re-reporting the clock status information of the UE specifically includes three steps similar to step 501d, step 501e, and step 501f.

Specifically, the base station 2 sends a clock status notification message to an AMF, and then the AMF forwards the clock status notification message to the TSCTSF. The clock status notification message includes identification information (a RAN ID) of the base station 2, identification information (a cell ID 2) of the cell 3, and identification information (a UE ID) of an affected UE, and further includes indication information and/or clock status information of the cell 3. The indication information indicates that the clock status information of the cell 3 does not meet the clock quality requirement parameter of the UE. The clock status information of the cell 3 includes one or more of the following information: a clock source, traceability to UTC, a synchronization state, clock accuracy, a clock class, frequency stability, and a source event. The source event may be a clock degradation, a clock fault, or clock improvement.

Then, the TSCTSF sends a notification message to the AF. The notification message includes the identification information of the affected UE, and includes indication information and/or clock status information of the affected UE. The indication information indicates that the clock status information of the affected UE does not meet the clock quality requirement parameter of the UE. The clock status information of the affected UE is determined based on the clock status information of the cell 3. The clock status information of the affected UE includes one or more of the following information: a clock source, traceability to UTC, a synchronization state, clock accuracy, a clock class, and frequency stability.

Step 504c: If the UE is not affected, re-report the clock status information of the UE.

The "not affected" herein means that clock status information of the cell 3 meets the clock quality requirement parameter of the UE.

Re-reporting the clock status information of the UE specifically includes three steps similar to step 501d, step 501e, and step 501f.

Specifically, the base station 2 sends a clock status notification message to the AMF, and then the AMF forwards the clock status notification message to the TSCTSF. The clock status notification message includes identification information (a RAN ID) of the base station 2, identification information (a cell ID 2) of the cell 3, and identification information (a UE ID) of the UE, and further includes indication information and/or clock status information of the cell 3. The indication information indicates that the clock status information of the cell 3 meets the clock quality requirement parameter of the UE. The clock status information of the cell 3 includes one or more of the following information: a clock source, traceability to UTC, a synchronization state, clock accuracy, a clock class, frequency stability, and a source event. The source event may be clock improvement.

Then, the TSCTSF sends a notification message to the AF. The notification message includes the identification information of the UE, and includes indication information and/or the clock status information of the UE. The indication information indicates that the clock status information of the affected UE meets the clock quality requirement parameter of the UE. The clock status information of the affected UE is determined based on the clock status information of the cell 3. The clock status information of the affected UE includes one or more of the following information: a clock source, traceability to UTC, a synchronization state, clock accuracy, a clock class, and frequency stability.

Scenario 2: The UE is in idle state and the UE moves from the cell 1 to the cell 3.

The scenario 2 relates to the following step 505 to step 508, step 509a, step 509b, and step 509c. Step 505: The UE in the idle state moves to the cell 3.

Step 506: The base station sends a notification message to the UE. Correspondingly, the UE receives the notification message.

The notification message includes identification information of the cell 3 and a report identifier 3 (report ID 3) of the cell 3.

The UE currently accesses the cell 3 of the base station 2.

The report ID 3 indicates a clock status of the cell 3.

Step 507: The UE determines whether a report identifier 1 is the same as the report identifier 3.

In a case, if the report identifier 1 is the same as the report identifier 3, it indicates that the clock status of the cell 3 is the same as a clock status of the cell 1. Because the UE is affected in the cell 1, the UE is still affected in the cell 3. In addition, if a report identifier 2 is the same as the report identifier 1, the UE does not enter the connected state.

In another case, if the report identifier 3 is different from the report identifier 1, the UE enters the connected state. Further, after the UE enters the connected state, the base station 2 further performs the following step 508, and performs step 509a, step 509b, or step 509c.

Step 508: The base station 2 obtains a context of the UE from the base station 1.

The context includes a clock quality requirement parameter of the UE and notification information. The notification information indicates that clock status information of the base station 1 does not meet the clock quality requirement parameter of the UE, and further indicates that a clock status notification message has been sent, where the clock status notification message indicates that the clock status information of the base station 1 does not meet the clock quality requirement parameter of the UE.

The following step 509a, step 509b, or step 509c is performed after step 508, that is, one of step 509a, step 509b, and step 509c is performed.

Step 509a is the same as step 504a in the foregoing embodiment.

Step 509b is the same as step 504b in the foregoing embodiment.

Step 509c is the same as step 504c in the foregoing embodiment.

In the foregoing solution, the UE moves between cells of different base stations, and correctly determines and reports an affected UE by using a cell as a granularity.

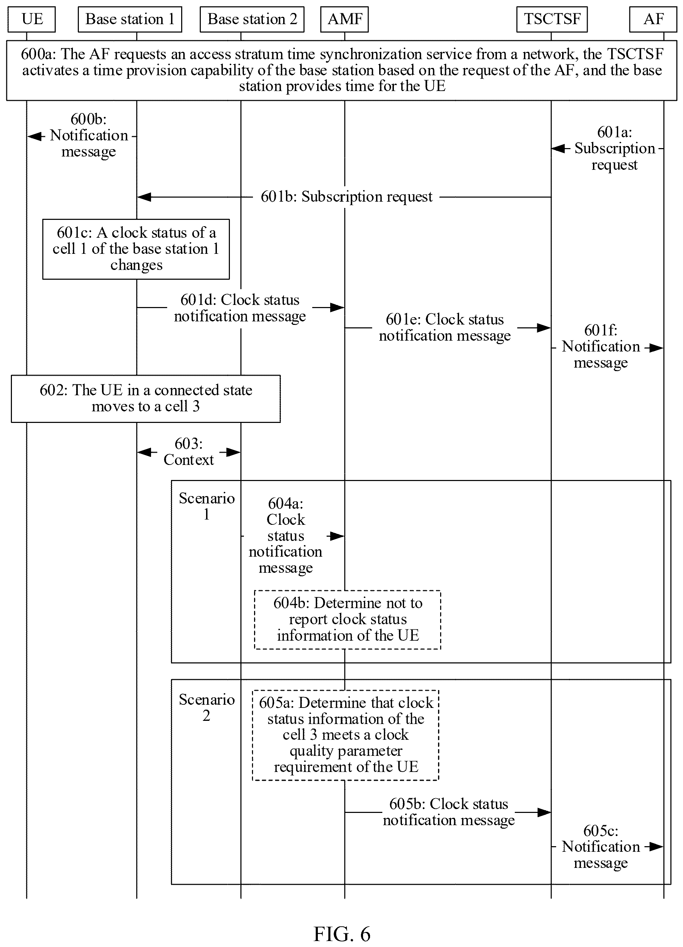

FIG. 6 is a schematic flowchart of a communication method according to an embodiment of this application. The embodiment in FIG. 6 is a specific example of the embodiments in FIG. 3(b) and FIG. 3(c). In this embodiment, a cell accessed by a UE is updated from a cell 1 of a base station 1 to a cell 3 of a base station 2.

The method includes the following steps.

Step 600a is the same as step 400a in the foregoing embodiment.

Step 600b is the same as step 400b in the foregoing embodiment.

Step 601a is the same as step 401a in the foregoing embodiment.

Step 601b is the same as step 401b in the foregoing embodiment.

Step 601c is the same as step 401c in the foregoing embodiment.

Step 601d is the same as step 401d in the foregoing embodiment.

Step 601e is the same as step 401e in the foregoing embodiment.

Step 601f is the same as step 401f in the foregoing embodiment.

Step 602: The UE in a connected state moves to the cell 3.

Step 603: The base station 2 obtains a context of the UE from the base station 1.

The context includes a clock quality requirement parameter of the UE.

After step 603, there may be two scenarios, which are respectively as follows:
Scenario 1: The following step 604a and step 604b are involved.

Step 604a: If the UE is still affected, the base station 2 sends a clock status notification message to an AMF. Correspondingly, the AMF receives the clock status notification message.

The "still affected" herein means that clock status information of the cell 3 does not meet the clock quality requirement parameter of the UE either.

The clock status notification message includes identification information (a RAN ID) of the base station 2, identification information (a cell ID 3) of the cell 3, and identification information (a UE ID) of an affected UE, and further includes indication information and/or the clock status information of the cell 3. The indication information indicates that the clock status information of the cell 3 does not meet the clock quality requirement parameter of the UE. The clock status information of the cell 3 includes one or more of the following information: a clock source, traceability to UTC, a synchronization state, clock accuracy, a clock class, frequency stability, and a source event. The source event may be a clock degradation, a clock fault, or clock improvement. Step 604b: The AMF determines not to report clock status information of the UE.

Specifically, the AMF determines, based on the clock status notification message in step 604a, that the clock status information of the cell 3 does not meet the clock quality requirement parameter of the UE, and determines that a clock status notification message has been sent in step 601e, where the clock status notification message indicates that clock status information of the cell 1 does not meet the clock quality requirement parameter of the UE. Therefore, the AMF determines not to send another clock status notification message anymore, where the clock status notification message indicates that the clock status information of the cell 3 does not meet the clock quality requirement parameter of the UE. This is because a TSCTSF/an AF has learned that the UE cannot obtain a proper time provision service in the cell 1. Although the UE is handed over to the cell 3, the cell 3 cannot provide a proper time provision service either. Therefore, a state in which the UE cannot obtain a proper time provision service does not change, and the AMF may not perform reporting anymore.

Scenario 2: The following step 605a to step 605c are involved.

Step 605a: If an AMF determines that the UE moves to the new cell 3, but receives no indication information from the base station 2, where the indication information indicates that clock status information of the cell 3 does not meet the clock quality requirement parameter of the UE, the AMF determines that the clock status information of the cell 3 meets the clock quality requirement parameter of the UE.

The indication information may be a clock status notification message, or may be information carried in the clock status notification message.

Step 605b: The AMF sends a clock status notification message to a TSCTSF. Correspondingly, the TSCTSF receives the clock status notification message.

The clock status notification message includes identification information (a RAN ID) of the base station 2, identification information (a cell ID 3) of the cell 3, identification information (a UE ID) of the UE, and indication information. The indication information indicates that clock status information of the UE meets the clock quality requirement parameter of the UE.

Step 605c: The TSCTSF sends a notification message to an AF. Correspondingly, the AF receives the notification message.

The notification message includes the identification information of the UE and the indication information. The indication information indicates that the clock status information of the UE meets the clock quality requirement parameter of the UE.

Optionally, the notification message carries the clock status information of the cell 3, where the TSCTSF may obtain the clock status information of the cell 3 from an OAM.

In the foregoing solution, the UE moves between cells of different base stations, and the AMF correctly determines and reports an affected UE by using a cell as a granularity.

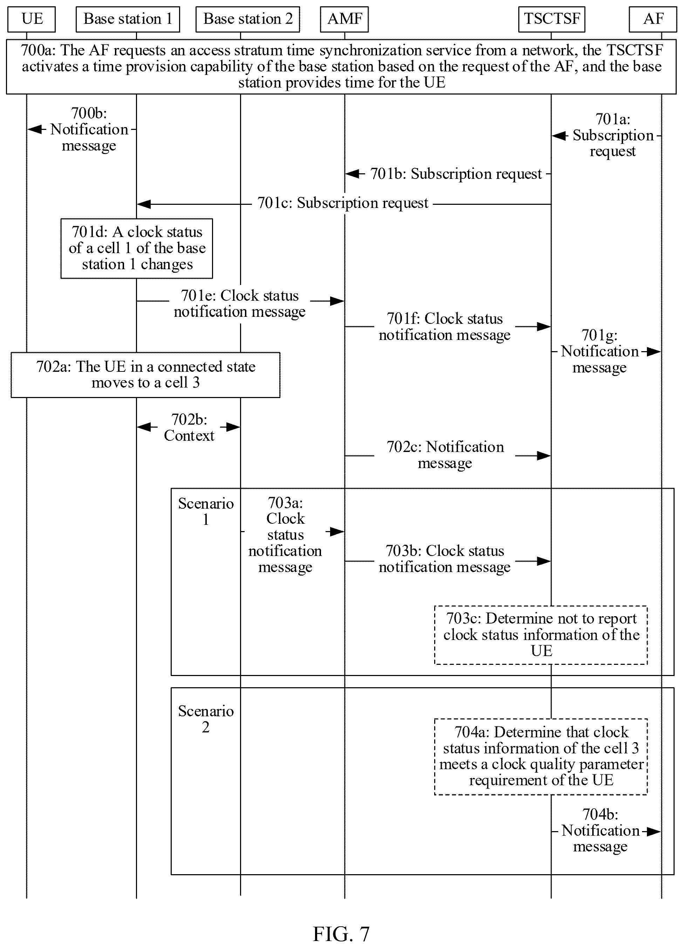

FIG. 7 is a schematic flowchart of a communication method according to an embodiment of this application. The embodiment in FIG. 7 is a specific example of the embodiments in FIG. 3(b) and FIG. 3(c). In this embodiment, a cell accessed by a UE is updated from a cell 1 of a base station 1 to a cell 3 of a base station 2.

The method includes the following steps.

Step 700a is the same as step 400a in the foregoing embodiment.

Step 700b is the same as step 400b in the foregoing embodiment.

Step 701a is the same as step 401a in the foregoing embodiment.

Step 701b: A TSCTSF sends a subscription request to an AMF. Correspondingly, the AMF receives the subscription request.

The subscription request includes identification information of the UE, and the subscription request is used to subscribe to a location of the UE. The location may be a cell in which the UE is currently located.

Step 701c is the same as step 401b in the foregoing embodiment.

Step 701d is the same as step 401c in the foregoing embodiment.

Step 701e is the same as step 401d in the foregoing embodiment.

Step 701f is the same as step 401e in the foregoing embodiment.

Step 701g is the same as step 401f in the foregoing embodiment.

Step 702a: The UE in a connected state moves to the cell 3.

Step 702b: The base station 2 obtains a context of the UE from the base station 1.

The context includes a clock quality requirement parameter of the UE.

Step 702c: The AMF sends a notification message to the TSCTSF. Correspondingly, the TSCTSF receives the notification message.

The notification message includes the identification information of the UE, identification information of the base station 2, and identification information of the cell 3. The notification message is used to notify information about the cell 3 in which the UE is currently located. After step 702c, there may be two scenarios, which are respectively as follows:
Scenario 1: The following step 703a to step 703c are involved.

Step 703a: If the UE is still affected, the base station 2 sends a clock status notification message to the AMF. Correspondingly, the AMF receives the clock status notification message.

The "still affected" herein means that clock status information of the cell 3 does not meet the clock quality requirement parameter of the UE either.

The clock status notification message includes the identification information (a RAN ID) of the base station 2, the identification information (a cell ID 3) of the cell 3, and identification information (a UE ID) of an affected UE, and further includes indication information and/or the clock status information of the cell 3. The indication information indicates that the clock status information of the cell 3 does not meet the clock quality requirement parameter of the UE. The clock status information of the cell 3 includes one or more of the following information: a clock source, traceability to UTC, a synchronization state, clock accuracy, a clock class, frequency stability, and a source event. The source event may be a clock degradation, a clock fault, or clock improvement.

Step 703b: The AMF sends a clock status notification message to the TSCTSF. Correspondingly, the TSCTSF receives the clock status notification message.

The clock status notification message is the same as the clock status notification message in step 703a.

Step 703c: The TSCTSF determines not to report clock status information of the UE.

Specifically, the TSCTSF determines, based on the clock status notification message in step 703b, that the clock status information of the cell 3 does not meet the clock quality requirement parameter of the UE, and determines that a notification message has been sent in step 701g, where the notification message indicates that clock status information of the cell 1 does not meet the clock quality requirement parameter of the UE. Therefore, the TSCTSF determines not to send another notification message anymore, where the notification message indicates that the clock status information of the cell 3 does not meet the clock quality requirement parameter of the UE. This is because an AF has learned that the UE cannot obtain a proper time provision service in the cell 1. Although the UE is handed over to the cell 3, the cell 3 cannot provide a proper time provision service either. Therefore, a state in which the UE cannot obtain a proper time provision service does not change, and the TSCTSF may not perform reporting anymore.

Scenario 2: The following step 704a and step 704b are involved.

Step 704a: If the TSCTSF determines that the UE moves to the new cell 3, but receives no indication information from the base station 2, where the indication information indicates that clock status information of the cell 3 does not meet the clock quality requirement parameter of the UE, the TSCTSF determines that the clock status information of the cell 3 meets the clock quality requirement parameter of the UE.

The indication information may be a clock status notification message, or may be information carried in the clock status notification message.

Step 704b: The TSCTSF sends a notification message to an AF. Correspondingly, the AF receives the notification message.

The notification message includes the identification information of the base station 2, the identification information of the cell 3, the identification information of the UE, and indication information. The indication information indicates that clock status information of the UE meets the clock quality requirement parameter of the UE.

Optionally, the notification message further includes the clock status information of the UE, where the clock status information of the UE is determined based on the clock status information of the cell 3. The TSCTSF may obtain, from an OAM, the clock status information of the cell 3 in which the UE is located. For example, the TSCTSF sends a query message to the OAM, where the query message includes the identification information of the cell 3, and then the OAM sends a query response to the TSCTSF, where the query response includes the clock status information of the cell 3.

In the foregoing solution, the UE moves between cells of different base stations, and the TSCTSF correctly determines and reports an affected UE by using a cell as a granularity.

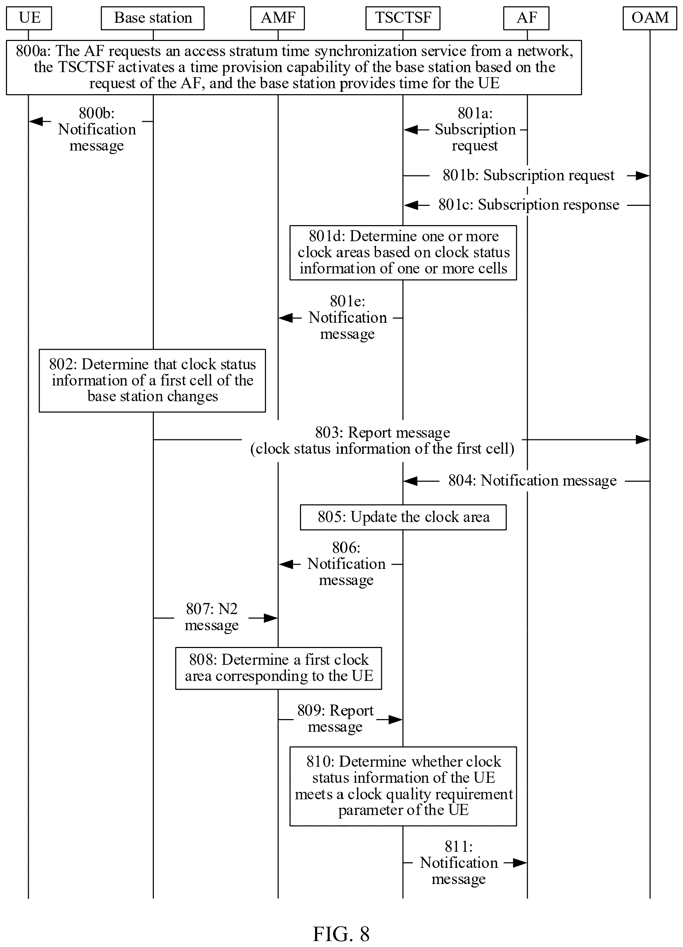

FIG. 8 is a schematic flowchart of a communication method according to an embodiment of this application. In this embodiment, a cell accessed by a UE is updated from a cell 1 of a base station 1 to a cell 3 of a base station 2. The method includes the following steps.

Step 800a is the same as step 400a in the foregoing embodiment.

Step 800b is the same as step 400b in the foregoing embodiment.

Step 801a is the same as step 401a in the foregoing embodiment.

Step 801b: A TSCTSF sends a subscription request to an OAM. Correspondingly, the OAM receives the subscription request.

The subscription request includes identification information of one or more base stations, and identification information of one or more cells of each base station.

The subscription request is used to subscribe to clock status information of the one or more cells. Step 801c: The OAM sends a subscription response to the TSCTSF. Correspondingly, the TSCTSF receives the subscription response.

The subscription response includes identification information of one or more base stations, identification information of one or more cells of each base station, and clock status information of the one or more cells.

The clock status information of the cell includes one or more of the following information: a clock source, traceability to UTC, a synchronization state, clock accuracy, a clock class, frequency stability, and a source event. The source event may be a clock degradation, a clock fault, or clock improvement.

Step 801d: The TSCTSF determines one or more clock areas based on clock status information of one or more cells.

One clock area includes one or more cells, clock status information of cells in a same clock area is the same, and clock status information of cells in different clock areas is different. In this embodiment of this application, the clock area is also referred to as an area of interest (area of interest).

For example, if the TSCTSF receives clock status information of the cell 1 to a cell 10 from the OAM, where the clock status information of the cell 1 to the cell 5 is the same, and the clock status information of the cell 6 to the cell 10 is the same, the TSCTSF determines a clock area 1 and a clock area 2, where the clock area 1 includes the cell 1 to the cell 5, and the clock area 2 includes the cell 6 to the cell 10.

Step 801e: The TSCTSF sends a notification message to an AMF. Correspondingly, the AMF receives the notification message.

The notification message indicates one or more clock areas. For example, the notification message includes identification information of the clock area 1 and identification information of one or more cells included in the clock area 1, and includes identification information of the clock area 2 and identification information of one or more cells included in the clock area 2.

Step 802: A base station determines that clock status information of a first cell of the base station changes.

Step 803: The base station sends a report message to the OAM. Correspondingly, the OAM receives the report message.

The report message includes clock status information of the first cell, and the clock status information is changed clock status information.

Step 804: The OAM sends a notification message to the TSCTSF. Correspondingly, the TSCTSF receives the notification message.

The notification message includes identification information of the first cell and the clock status information of the first cell.

Step 805: The TSCTSF updates the clock area.

To be specific, the TSCTSF re-determines the clock area based on the recently determined one or more clock areas and the clock status information of the first cell.

In the foregoing example, it is assumed that the recently determined clock areas include the clock area 1 and the clock area 2, the clock area 1 includes the cell 1 to the cell 5, and the clock area 2 includes the cell 6 to the cell 10. The TSCTSF receives clock status information of the cell 1 in the notification message in step 804, and the TSCTSF re-determines the clock area. Assuming that the clock status information of the cell 1 is different from clock status information of the cell in the clock area 1, and is also different from clock status information of the cell in the clock area 2, the TSCTSF re-determines a clock area 3, where the clock area 3 includes the cell 1. Therefore, updated clock areas include the clock area 1, the clock area 2, and the clock area 3, the clock area 1 includes a cell 2 to the cell 5, the clock area 2 includes the cell 6 to the cell 10, and the clock area 3 includes the cell 1.

Step 806: The TSCTSF sends a notification message to the AMF. Correspondingly, the AMF receives the notification message.

The notification message indicates one or more latest clock areas.

Step 807: The base station sends an N2 message to the AMF. Correspondingly, the AMF receives the N2 message.

The N2 message includes identification information of a cell in which the UE is located. For example, if the UE is located in the cell 1, the N2 message includes identification information of the cell 1.

Step 808: The AMF determines a first clock area corresponding to the UE.

The AMF determines, based on the recently received one or more clock areas and the identification information of the cell in which the UE is located, the first clock area corresponding to the UE. Assuming that the clock areas recently received by the AMF include the clock area 1, the clock area 2, and the clock area 3, the clock area 1 includes the cell 2 to the cell 5, the clock area 2 includes the cell 6 to the cell 10, the clock area 3 includes the cell 1, and the cell in which the UE is located is the cell 1, the AMF determines that the first clock area corresponding to the UE is the clock area 3.

Step 809: The AMF sends a report message to the TSCTSF. Correspondingly, the TSCTSF receives the report message.

The report message includes identification information of the UE and identification information of the first clock area in which the UE is located.

Step 810: The TSCTSF determines whether clock status information of the UE meets a clock quality requirement parameter of the UE.

The TSCTSF determines, based on the identification information of the first clock area in which the UE is located, the first clock area in which the UE is located, obtains clock status information of the first clock area, and then determines the clock status information of the UE based on the clock status information of the first clock area.

When the clock status information of the UE does not meet the clock quality requirement parameter of the UE, the following step 811 is performed.

Step 811: The TSCTSF sends a notification message to an AF. Correspondingly, the AF receives the notification message.

The notification message includes the identification information of the UE, and includes indication information and/or the clock status information of the UE.

The indication information indicates that the clock status information of the UE does not meet the clock quality requirement parameter of the UE.

The clock status information of the UE includes one or more of the following information: a clock source, traceability to UTC, a synchronization state, clock accuracy, a clock class, and frequency stability.

In the foregoing solution, a clock area is set by using a cell as a granularity, and whether the clock status information of the UE meets the clock quality requirement parameter of the UE is determined based on the clock area corresponding to the UE, so that an affected UE can be correctly determined and reported.

In a possible implementation, the clock status information in the embodiment in FIG. 8 may alternatively be implemented by using a base station as a granularity. An implementation procedure of the clock status information is similar to that in the embodiment in FIG. 8, and only descriptions about the cell need to be replaced with descriptions about the base station.

In a possible implementation, in this application, whether clock status information of the base station meets the clock quality requirement parameter of the UE may alternatively be determined according to another method. For example, the TSCTSF subscribes to location information of the UE from the AMF. When the location information of the UE changes, the AMF sends a latest location of the UE to the TSCTSF. For example, when the UE is located in a first base station, the AMF sends, to the TSCTSF, identification information of the first base station in which the UE is located, and then the TSCTSF obtains clock status information of the first base station from the OAM based on the identification information of the first base station. In addition, the TSCTSF may further obtain the clock quality requirement parameter of the UE from a third-party application (for example, the AF). The TSCTSF determines whether the clock status information of the first base station meets the clock quality requirement parameter of the UE, and sends a notification message to the AF, where the notification message indicates whether the clock status information of the first base station meets the clock quality requirement parameter of the UE. Then, if the UE moves from the first base station to a second base station, the AMF sends, to the TSCTSF, identification information of the second base station in which the UE is located, and then the TSCTSF obtains clock status information of the second base station from the OAM based on the identification information of the second base station. The TSCTSF determines whether the clock status information of the second base station meets the clock quality requirement parameter of the UE, and sends a notification message to the AF, where the notification message indicates whether the clock status information of the second base station meets the clock quality requirement parameter of the UE.

In a possible implementation, in this application, whether clock status information of the cell meets the clock quality requirement parameter of the UE may alternatively be determined according to another method. For example, the TSCTSF subscribes to location information of the UE from the AMF. When the location information of the UE changes, the AMF sends a latest location of the UE to the TSCTSF. For example, when the UE is located in a first cell, the AMF sends, to the TSCTSF, identification information of the first cell in which the UE is located, and then the TSCTSF obtains clock status information of the first cell from the OAM based on the identification information of the first cell. In addition, the TSCTSF may further obtain the clock quality requirement parameter of the UE from a third-party application (for example, the AF). The TSCTSF determines whether the clock status information of the first cell meets the clock quality requirement parameter of the UE, and sends a notification message to the AF, where the notification message indicates whether the clock status information of the first cell meets the clock quality requirement parameter of the UE. Then, if the UE moves from the first cell to a second cell, the AMF sends, to the TSCTSF, identification information of the second cell in which the UE is located, and then the TSCTSF obtains clock status information of the second cell from the OAM based on the identification information of the second cell. The TSCTSF determines whether the clock status information of the second cell meets the clock quality requirement parameter of the UE, and sends a notification message to the AF, where the notification message indicates whether the clock status information of the second cell meets the clock quality requirement parameter of the UE. The first cell and the second cell belong to a same base station, or belong to different base stations.

It may be understood that, to implement functions in the foregoing embodiments, an access network device, a mobility management network element, or a clock management network element includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

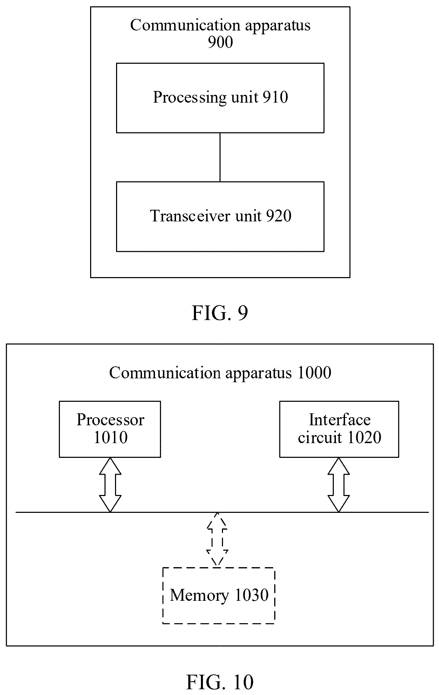

FIG. 9 and FIG. 10 are diagrams of possible structures of communication apparatuses according to embodiments of this application. These communication apparatuses may be configured to implement functions of the access network device, the mobility management network element, or the clock management network element in the foregoing method embodiments. Therefore, beneficial effects of the foregoing method embodiments can also be implemented. In embodiments of this application, the communication apparatus may be an access network device, a mobility management network element, or a clock management network element, or may be a module (for example, a chip) in the access network device, the mobility management network element, or the clock management network element.

As shown in FIG. 9, the communication apparatus 900 includes a processing unit 910 and a transceiver unit 920. The communication apparatus 900 is configured to implement functions of the access network device, the mobility management network element, or the clock management network element in the foregoing method embodiments. The transceiver unit 920 may be configured to implement a corresponding communication function. The transceiver unit 920 may also be referred to as a communication interface or a communication unit. The processing unit 910 may be configured to implement a corresponding processing function. Optionally, the communication apparatus 900 further includes a storage unit. The storage unit may be configured to store instructions and/or data. The processing unit 910 may read the instructions and/or the data in the storage unit, to enable the communication apparatus 900 to implement actions of the access network device, the mobility management network element, or the clock management network element in the foregoing method embodiments.

When the communication apparatus 900 is configured to implement functions of the first access network device, the first base station, or the base station 1 in the foregoing method embodiments, the processing unit 910 is configured to obtain a clock quality requirement parameter of a terminal device. The transceiver unit 920 is configured to send a first message to a clock management network element when clock status information of the first access network device accessed by the terminal device does not meet the clock quality requirement parameter of the terminal device, where the first message indicates that the clock status information of the first access network device does not meet the clock quality requirement parameter of the terminal device.

In a possible implementation, that the clock status information of the first access network device accessed by the terminal device does not meet the clock quality requirement parameter of the terminal device includes: clock status information of a first cell does not meet the clock quality requirement parameter of the terminal device, where the first cell belongs to the first access network device, and the first cell is a cell accessed by the terminal device.

In a possible implementation, the first message includes identification information of the terminal device, identification information of the first access network device, and indication information, and the indication information indicates that the clock status information of the first access network device does not meet the clock quality requirement parameter of the terminal device.

In a possible implementation, the first message includes identification information of the terminal device, identification information of the first access network device, and the clock status information of the first access network device.

In a possible implementation, that the processing unit 910 is configured to obtain the clock quality requirement parameter of the terminal device specifically includes: receiving a subscription request from the clock management network element by using the transceiver unit 920, where the subscription request includes the identification information of the terminal device and the clock quality requirement parameter of the terminal device, and the subscription request is used to subscribe to a change notification of clock status information of the terminal device.

In a possible implementation, that the processing unit 910 is configured to obtain the clock quality requirement parameter of the terminal device specifically includes: receiving a context of the terminal device from a second access network device by using the transceiver unit 920, where the context includes the clock quality requirement parameter of the terminal device; and the first access network device is a target access network device of the terminal device, and the second access network device is a source access network device of the terminal device.

In a possible implementation, the context further includes notification information, and the notification information indicates whether clock status information of the second access network device meets the clock quality requirement parameter of the terminal device.

In a possible implementation, the transceiver unit 920 is further configured to send a second message to the clock management network element when the clock status information of the first access network device meets the clock quality requirement parameter of the terminal device, and the notification information indicates that the clock status information of the second access network device does not meet the clock quality requirement parameter of the terminal device, where the second message indicates that the clock status information of the first access network device meets the clock quality requirement parameter of the terminal device.

In a possible implementation, the processing unit 910 is further configured to: send a third message to the clock management network element by using the transceiver unit 920, or determine not to send the third message when the clock status information of the first access network device does not meet the clock quality requirement parameter of the terminal device, and the notification information indicates that the clock status information of the second access network device does not meet the clock quality requirement parameter of the terminal device. The third message indicates that the clock status information of the first access network device does not meet the clock quality requirement parameter of the terminal device.

When the communication apparatus 900 is configured to implement functions of the second access network device, the second base station, or the base station 2 in the foregoing method embodiments, the transceiver unit 920 is configured to: receive a request message from a first access network device, where the request message is used to request a context of a terminal device; and send the context to the first access network device, where the context includes a clock quality requirement parameter of the terminal device; and the first access network device is a target access network device of the terminal device, and the second access network device is a source access network device of the terminal device.

In a possible implementation, the context further includes notification information, and the notification information indicates whether clock status information of the second access network device meets the clock quality requirement parameter of the terminal device.

When the communication apparatus 900 is configured to implement functions of the core network element, the AMF, or the TSCTSF in the foregoing method embodiments, the transceiver unit 920 is configured to receive a clock status notification message from a first access network device, where the clock status notification message indicates that clock status information of the first access network device does not meet a clock quality requirement parameter of a terminal device. The processing unit 910 is configured to determine, when the core network element has sent a first message, not to send a second message, where the first message indicates that clock status information of a second access network device does not meet the clock quality requirement parameter of the terminal device, the second message indicates that the clock status information of the first access network device does not meet the clock quality requirement parameter of the terminal device, the first access network device is a target access network device, and the second access network device is a source access network device.

In a possible implementation, the clock status notification message includes identification information of the first access network device, identification information of the terminal device, and the clock status information of the first access network device. It is determined that the clock status information of the first access network device does not meet the clock quality requirement parameter of the terminal device.

In a possible implementation, the transceiver unit 920 is further configured to receive a subscription request, where the subscription request includes the identification information of the terminal device and the clock quality requirement parameter of the terminal device, and the subscription request is used to subscribe to a change notification of clock status information of the terminal device.

In a possible implementation, the clock status notification message includes the clock quality requirement parameter of the terminal device.

In a possible implementation, the clock status notification message includes identification information of the first access network device, identification information of the terminal device, and indication information, and the indication information indicates that the clock status information of the first access network device does not meet the clock quality requirement parameter of the terminal device.

In a possible implementation, the core network element is a mobility management network element. That the processing unit 910 is configured to determine not to send the second message specifically includes: determining not to send the second message to a clock management network element.

In a possible implementation, the core network element is a clock management network element. That the processing unit 910 is configured to determine not to send the second message specifically includes: determining not to send the second message to an application function network element. When the communication apparatus 900 is configured to implement functions of the core network element, the AMF, or the TSCTSF in the foregoing method embodiments, the processing unit 910 is configured to determine that a terminal device moves from a second access network device to a first access network device, where the first access network device is a target access network device of the terminal device, and the second access network device is a source access network device of the terminal device. The transceiver unit 920 is configured to send a second message when the core network element receives no first indication information from the first access network device and has sent a first message, where the first indication information indicates that clock status information of the first access network device does not meet a clock quality requirement parameter of the terminal device, the first message indicates that clock status information of the second access network device does not meet the clock quality requirement parameter of the terminal device, and the second message indicates that the clock status information of the first access network device meets the clock quality requirement parameter of the terminal device.

In a possible implementation, the processing unit 910 is further configured to determine that the clock status information of the first access network device meets the clock quality requirement parameter of the terminal device.

In a possible implementation, the transceiver unit 920 is further configured to receive a first subscription request, where the first subscription request includes identification information of the terminal device and the clock quality requirement parameter of the terminal device, and the first subscription request is used to subscribe to a change notification of clock status information of the terminal device.

In a possible implementation, the second message includes identification information of the first access network device, the identification information of the terminal device, and second indication information, and the second indication information indicates that the clock status information of the first access network device meets the clock quality requirement parameter of the terminal device.

In a possible implementation, the second message includes identification information of the first access network device, the identification information of the terminal device, and the clock status information of the first access network device.

In a possible implementation, the core network element is a mobility management network element. That the transceiver unit 920 is configured to send the second message specifically includes: sending the second message to a clock management network element.

In a possible implementation, the core network element is a clock management network element. That the transceiver unit 920 is configured to send the second message specifically includes: sending the second message to an application function network element.

In a possible implementation, the core network element is the clock management network element. The transceiver unit 920 is further configured to: send a second subscription request to a mobility management network element, where the second subscription request is used to subscribe to a change notification of a location of the terminal device; and receive a notification message from the mobility management network element, where the notification message includes the identification information of the first access network device in which the terminal device is located. That the processing unit 910 is configured to determine that the terminal device moves from the second access network device to the first access network device specifically includes: determining, based on the notification message, that the terminal device moves from the second access network device to the first access network device.

For more detailed descriptions of the processing unit 910 and the transceiver unit 920, directly refer to related descriptions in the foregoing method embodiments. Details are not described herein. As shown in FIG. 10, the communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions executed by the processor 1010, or store input data required by the processor 1010 to run the instructions, or store data generated after the processor 1010 runs the instructions.

When the communication apparatus 1000 is configured to implement the foregoing method embodiments, the processor 1010 is configured to implement functions of the processing unit 910, and the interface circuit 1020 is configured to implement functions of the transceiver unit 920.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to the processor, to enable the processor to read information from the storage medium and write information into the storage medium. Certainly, the storage medium may alternatively be a component of the processor. The processor and the storage medium may be disposed in the ASIC. Certainly, the processor and the storage medium may exist in a base station or terminal as discrete components.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a base station, a UE, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally represents an "or" relationship between the associated objects. In a formula in this application, the character "/" represents a "division" relationship between the associated objects.

It may be understood that various numbers in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application. According to the foregoing descriptions of this specification in this application, technologies in the art may use or implement the content of this application. Any modification based on the disclosed content shall be considered apparent in the art. The basic principles described in this application may be used for other variations without departing from the essence and scope of this application. Therefore, the content disclosed in this application is not limited to the described embodiments and designs but may also be extended to a maximum scope that is consistent with the principles and disclosed new features of this application.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A communication method, applied to a first access network device, wherein the method comprises:
obtaining a clock quality requirement parameter of a terminal device; and
sending a first message to a clock management network element when clock status information of the first access network device accessed by the terminal device does not meet the clock quality requirement parameter of the terminal device, wherein the first message indicates that the clock status information of the first access network device does not meet the clock quality requirement parameter of the terminal device.

2. The method according to claim 1, wherein that the clock status information of the first access network device accessed by the terminal device does not meet the clock quality requirement parameter of the terminal device comprises:
clock status information of a first cell does not meet the clock quality requirement parameter of the terminal device, wherein the first cell belongs to the first access network device, and the first cell is a cell accessed by the terminal device.

3. The method according to claim 1 or 2, wherein the first message comprises identification information of the terminal device, identification information of the first access network device, and indication information, and the indication information indicates that the clock status information of the first access network device does not meet the clock quality requirement parameter of the terminal device.

4. The method according to claim 1 or 2, wherein the first message comprises identification information of the terminal device, identification information of the first access network device, and the clock status information of the first access network device.

5. The method according to any one of claims 1 to 3, wherein obtaining the clock quality requirement parameter of the terminal device comprises:
receiving a subscription request from the clock management network element, wherein the subscription request comprises the identification information of the terminal device and the clock quality requirement parameter of the terminal device, and the subscription request is used to subscribe to a change notification of clock status information of the terminal device.

6. The method according to any one of claims 1 to 3, wherein obtaining the clock quality requirement parameter of the terminal device comprises:
receiving a context of the terminal device from a second access network device, wherein the context comprises the clock quality requirement parameter of the terminal device; and
the first access network device is a target access network device of the terminal device, and the second access network device is a source access network device of the terminal device.

7. The method according to claim 6, wherein the context further comprises notification information, and the notification information indicates whether clock status information of the second access network device meets the clock quality requirement parameter of the terminal device.

8. The method according to claim 7, wherein the method further comprises:
sending a second message to the clock management network element when the clock status information of the first access network device meets the clock quality requirement parameter of the terminal device, and the notification information indicates that the clock status information of the second access network device does not meet the clock quality requirement parameter of the terminal device, wherein the second message indicates that the clock status information of the first access network device meets the clock quality requirement parameter of the terminal device.

9. A communication method, applied to a core network element, wherein the method comprises:
receiving a clock status notification message from a first access network device, wherein the clock status notification message indicates that clock status information of the first access network device does not meet a clock quality requirement parameter of the terminal device; and determining, when the core network element has sent a first message, not to send a second message, wherein
the first message indicates that clock status information of a second access network device does not meet the clock quality requirement parameter of the terminal device, the second message indicates that the clock status information of the first access network device does not meet the clock quality requirement parameter of the terminal device, the first access network device is a target access network device, and the second access network device is a source access network device.

10. The method according to claim 9, wherein the clock status notification message comprises identification information of the first access network device, identification information of the terminal device, and the clock status information of the first access network device; and the method further comprises:
determining that the clock status information of the first access network device does not meet the clock quality requirement parameter of the terminal device.

11. The method according to claim 10, wherein the method further comprises:
receiving a subscription request, wherein the subscription request comprises the identification information of the terminal device and the clock quality requirement parameter of the terminal device, and the subscription request is used to subscribe to a change notification of clock status information of the terminal device.

12. The method according to claim 10, wherein the clock status notification message comprises the clock quality requirement parameter of the terminal device.

13. The method according to claim 9, wherein the clock status notification message comprises identification information of the first access network device, identification information of the terminal device, and indication information, and the indication information indicates that the clock status information of the first access network device does not meet the clock quality requirement parameter of the terminal device.

14. The method according to any one of claims 9 to 13, wherein the core network element is a mobility management network element; and
determining not to send the second message comprises:
determining not to send the second message to a clock management network element.

15. The method according to any one of claims 9 to 13, wherein the core network element is a clock management network element; and
determining not to send the second message comprises:
determining not to send the second message to an application function network element.

16. A communication method, applied to a core network element, wherein the method comprises:
determining that a terminal device moves from a second access network device to a first access network device, wherein the first access network device is a target access network device of the terminal device, and the second access network device is a source access network device of the terminal device; and
sending a second message when the core network element receives no first indication information from the first access network device and has sent a first message, wherein
the first indication information indicates that clock status information of the first access network device does not meet a clock quality requirement parameter of the terminal device, the first message indicates that clock status information of the second access network device does not meet the clock quality requirement parameter of the terminal device, and the second message indicates that the clock status information of the first access network device meets the clock quality requirement parameter of the terminal device.

17. The method according to claim 16, wherein the method further comprises:
determining that the clock status information of the first access network device meets the clock quality requirement parameter of the terminal device.

18. The method according to claim 17, wherein the method further comprises:
receiving a first subscription request, wherein the first subscription request comprises identification information of the terminal device and the clock quality requirement parameter of the terminal device, and the first subscription request is used to subscribe to a change notification of clock status information of the terminal device.

19. The method according to any one of claims 16 to 18, wherein the second message comprises identification information of the first access network device, the identification information of the terminal device, and second indication information, and the second indication information indicates that the clock status information of the first access network device meets the clock quality requirement parameter of the terminal device.

20. The method according to any one of claims 16 to 18, wherein the second message comprises identification information of the first access network device, the identification information of the terminal device, and the clock status information of the first access network device.

21. The method according to any one of claims 16 to 20, wherein the core network element is a mobility management network element; and
sending the second message comprises:
sending the second message to a clock management network element.

22. The method according to any one of claims 16 to 20, wherein the core network element is a clock management network element; and
sending the second message comprises:
sending the second message to an application function network element.

23. The method according to any one of claims 16 to 20 and 22, wherein the core network element is the clock management network element;
the method further comprises:
sending a second subscription request to a mobility management network element, wherein the second subscription request is used to subscribe to a change notification of a location of the terminal device; and
receiving a notification message from the mobility management network element, wherein the notification message comprises the identification information of the first access network device in which the terminal device is accessed; and
determining that the terminal device moves from the second access network device to the first access network device comprises:
determining, based on the notification message, that the terminal device moves from the second access network device to the first access network device.

24. A communication apparatus, comprising a processor coupled to a memory, wherein the processor is configured to invoke a program stored in the memory, to perform the method according to any one of claims 1 to 8, or perform the method according to any one of claims 9 to 15, or perform the method according to any one of claims 16 to 23.

25. A communication apparatus, comprising a processor and a memory, wherein the memory is configured to store computer instructions, and when the communication apparatus runs, the processor executes the computer instructions stored in the memory, to perform the method according to any one of claims 1 to 8, or perform the method according to any one of claims 9 to 15, or perform the method according to any one of claims 16 to 23.

26. A communication apparatus, comprising a processor and an interface circuit, wherein the processor is configured to: communicate with another apparatus through the interface circuit, and perform the method according to any one of claims 1 to 8, or perform the method according to any one of claims 9 to 15, or perform the method according to any one of claims 16 to 23.

27. A communication system, comprising a first access network device configured to perform the method according to any one of claims 1 to 8, and a clock management network element configured to receive a first message from the first access network device.

28. A communication system, comprising a core network element configured to perform the method according to any one of claims 9 to 15, and a first access network device configured to send a clock status notification message to the core network element.

29. A communication system, comprising a core network element configured to perform the method according to any one of claims 16 to 23, and a first network element configured to receive a second message from the core network element.

30. A computer-readable storage medium, wherein the storage medium stores a computer program or instructions, and when the computer program or the instructions are executed by a communication apparatus, the method according to any one of claims 1 to 8 is implemented, or the method according to any one of claims 9 to 15 is implemented, or the method according to any one of claims 16 to 23 is implemented.
